# EUROPÄISCHE PATENTSCHRIFT

(11) **EP 3 379 191 B1**
(45) Veröffentlichungstag und Bekanntmachung des Hinweises auf die Patenterteilung: **11.03.2020**
(21) Anmeldenummer: 17161771.5
(22) Anmeldetag: 20.03.2017
(51) Int. Cl.: F28F 9/02, F24H 7/02, F28D 20/00

(54) **WÄRMESPEICHERVORRICHTUNG UND VERFAHREN ZUM BETREIBEN EINER WÄRMESPEICHERVORRICHTUNG**
THERMAL STORAGE DEVICE AND METHOD FOR OPERATING A THERMAL STORAGE DEVICE
DISPOSITIF D'ACCUMULATEUR DE CHALEUR ET PROCÉDÉ DE FONCTIONNEMENT D'UN DISPOSITIF D'ACCUMULATEUR DE CHALEUR

(43) Veröffentlichungstag der Anmeldung: 26.09.2018
(73) Patentinhaber: Lumenion GmbH, 10829 Berlin (DE)
(72) Erfinder: ZWINKELS, Andrew, 10827 Berlin (DE)
(74) Vertreter: Ridderbusch, Oliver

(56) Entgegenhaltungen:
- EP-A1- 3 002 528
- WO-A1-2015/039158
- WO-A1-2016/035105

## Beschreibung

Die Erfindung betrifft gemäß Anspruch 1 eine Wärmespeichervorrichtung zum Speichern von elektrischer Energie in Form von Wärmeenergie. Außerdem betrifft die Erfindung gemäß Anspruch 13 ein Verfahren zum Betreiben einer Wärmespeichervorrichtung zum Speichern von elektrischer Energie in Wärmeenergie.

Insbesondere durch die verstärkte Nutzung regenerativer Energiequellen schwankt die Gesamtmenge an erzeugter elektrischer Energie zeitlich stark. Dadurch kann die verfügbare elektrische Energie einen momentanen Bedarf erheblich übertreffen. Beispielsweise in solchen Fällen ist es wünschenswert, erzeugte elektrische Energie zu speichern. Energiespeicher, die Energie in elektrischer oder chemischer Form speichern (wie zum Beispiel elektrochemische Batterien oder Kondensatoren) können zu vertretbaren Kosten aber nur verhältnismäßig geringe Energiemengen speichern. Um größere Energiemengen zu speichern, werden auch Pumpspeicherwerke genutzt. Diese erfordern jedoch einen großen Höhenunterschied, was in der Regel nur in Gebirgsregionen umsetzbar ist.

Demgegenüber können verhältnismäßig große Energiemengen zu moderaten Kosten mit gattungsgemäßen Wärmespeichervorrichtungen gespeichert werden, welche elektrische Energie zunächst in Wärmeenergie umwandeln und diese sodann speichern. Eine solche Wärmespeichervorrichtung umfasst mehrere aufeinandergestapelte Wärmespeichereinheiten und ein Verteilerrohr zum Zuleiten von flüssigem Arbeitsfluid zu den Wärmespeichereinheiten. Jede Wärmespeichereinheit umfasst mindestens einen elektrischen Heizer zum Umwandeln von elektrischer Energie in Wärmeenergie, mindestens einen Wärmespeicherkörper zum Aufnehmen und Speichern von Wärmeenergie des elektrischen Heizers und einen Wärmetauscher mit Wärmetauscherrohren zum Aufnehmen von Wärmeenergie vom Wärmespeicherkörper und zum Verdampfen von in den Wärmetauscherrohren leitbarem Arbeitsfluid. Die Wärmespeichervorrichtung umfasst ferner ein Sammelrohr, welches mit den Wärmetauschern verbunden ist, zum Ableiten des in den Wärmetauschern verdampften Arbeitsfluids.

In entsprechender Weise umfasst ein gattungsgemäßes Verfahren zum Betreiben einer Wärmespeichervorrichtung zum Speichern von elektrischer Energie in Wärmeenergie die Schritte, dass flüssiges Arbeitsfluid mit einem Verteilerrohr zu mehreren aufeinandergestapelten Wärmespeichereinheiten zugeleitet wird, mindestens ein elektrischer Heizer von jeder Wärmespeichereinheit elektrische Energie in Wärmeenergie umwandelt, mindestens ein Wärmespeicherkörper von jeder Wärmespeichereinheit Wärmeenergie des elektrischen Heizers aufnimmt und speichert, wobei Wärmetauscherrohre eines Wärmetauschers Wärmeenergie vom Wärmespeicherkörper aufnehmen, wobei durch die Wärmetauscherrohre geleitetes Arbeitsfluid verdampft wird und wobei ein Sammelrohr, welches mit den Wärmetauschern verbunden ist, das in den Wärmetauschern verdampfte Arbeitsfluid ableitet.

Eine gattungsgemäße Wärmespeichervorrichtung ist beispielsweise von der Anmelderin in der europäischen Patentanmeldung EP 3 002 528 A1 beschrieben. Andere Wärmespeicher sind beispielsweise aus DE 10 2013 004 330 A1, DE 10 2008 030 212 A1 und DE 11 2012 002 387 T5 bekannt. Aus WO 2016/035105 A1 ist zudem ein Wärmespeicher bekannt, der einen Phasenübergang eines Wärmespeichermaterials nutzt. WO 2015/039158 A1 beschreibt einen Wärmespeicher mit einer Doppelrohrleitung, welche separat flüssiges und verdampftes Wärmeträgermedium führt.

Als eine **Aufgabe** der Erfindung kann angesehen werden, eine Wärmespeichervorrichtung und ein Verfahren zum Betreiben einer Wärmespeichervorrichtung anzugeben, welche eine hohe Effizienz bei kostengünstigem Aufbau ermöglichen.

Diese Aufgabe wird durch die Wärmespeichervorrichtung gemäß Anspruch 1 sowie durch das Verfahren mit den Merkmalen des Anspruchs 13 gelöst.

Vorteilhafte Ausgestaltungen der erfindungsgemäßen Wärmespeichervorrichtung und des erfindungsgemäßen Verfahrens sind Gegenstand der abhängigen Ansprüche und werden in der folgenden Beschreibung erläutert.

### Druckgestaltung über die Wärmetauscher

Bei der erfindungsgemäßen Wärmespeichervorrichtung ist das Sammelrohr mit einer Flüssigkeit gefüllt und in einem oberen Bereich des Sammelrohrs befindet sich ein Dampfauslass, durch welchen verdampftes Arbeitsfluid, welches durch die Flüssigkeit im Sammelrohr aufsteigt, ableitbar ist.

Bei dem erfindungsgemäßen Verfahren wird das Sammelrohr mit einer Flüssigkeit befüllt und verdampftes Arbeitsfluid, welches durch die Flüssigkeit im Sammelrohr aufsteigt, wird durch einen Dampfauslass in einem oberen Bereich des Sammelrohrs abgeleitet.

Der Erfindung liegt die Erkenntnis zugrunde, dass bei einer gattungsgemäßen Wärmespeichervorrichtung insbesondere aufgrund des Eigengewichts des Arbeitsfluids im Verteilerrohr unten ein höherer Druck herrscht als oben. Mit anderen Worten bewirkt eine Fluidsäule im Verteilerrohr, dass der Fluidruck von oben nach unten im Verteilerrohr zunimmt. Eine derartige Druckverteilung kann sich zusätzlich oder alternativ auch aufgrund fluid- oder strömungsmechanischen Gegebenheiten bei der Versorgung des Verteilerrohrs mit Arbeitsfluid ausbilden. Eine Folge eines von oben nach unten ansteigenden Druckgefälles ist, dass dadurch an einem unteren Wärmetauscher, der mit einem unteren Bereich des Verteilerrohrs verbunden ist, im Vergleich zu einem oberen Wärmetauscher, der mit einem oberen Bereich des Verteilerrohrs verbunden ist, ein höherer Fluiddruck anliegt.

Es wurde ferner erkannt, dass wegen der im Verteilerrohr und über die einzelnen Wärmetauscher ungleichmäßig vorliegenden Fluiddruckverteilung das Arbeitsfluid die Wärmetauscherrohre einer gattungsgemäßen Wärmespeichervorrichtung mit ungleicher Flussgeschwindigkeit und somit in der Regel mit ungleichem Durchsatz oder Fluss durchströmt. Bei einem ansteigenden Druckgefälle von oben nach unten durchströmt das Arbeitsfluid untere Wärmetauscher somit mit einer höheren Flussgeschwindigkeit und einem höheren Durchsatz im Vergleich zu darüber liegenden Wärmetauschern.

Ein Grundgedanke der Erfindung liegt darin, dass ein Druckgefälle im Verteilerrohr und über die Wärmetauscherrohre durch ein zum Druckgefälle im Verteilerrohr gleiches Druckgefälle im Sammelrohr kompensiert werden kann, so dass das Arbeitsfluid alle Wärmetauscherrohre mit gleichem Durchsatz durchströmt.

Dies hat die vorteilhafte Wirkung, dass in allen aufeinandergestapelten Wärmespeichereinheiten in etwa die gleiche Menge an Arbeitsfluid pro Zeit in jedem Wärmetauscherrohr verdampft und dem Sammelrohr zugeführt werden kann und in etwa die gleiche Menge an Wärmeenergie pro Zeit vom Arbeitsfluid in den Wärmetauscherrohren aufgenommen werden kann. Damit kann die in den gestapelten Wärmespeichereinheiten gespeicherte Wärmeenergie effizient und homogen auf das Arbeitsfluid übertragen werden.

Ein weiterer vorteilhafter Effekt der Erfindung ist, dass ein gewünschter gleichmäßiger Fluss in allen Wärmetauscherrohren trotz unterschiedlichem Rohreingangsdruck ohne zusätzlich flusssteuernde Einrichtungen erreicht werden kann, insbesondere ohne das aufwändige und teure Vorsehen von Pumpen oder Drosseln an den einzelnen Wärmetauscherrohren. Vorzugsweise sind in einem Bereich stromabwärts vom Verteilerrohr und stromaufwärts vom Sammelrohr keine Pumpen und/oder Drosseln vorgesehen.

### Sammelrohr der Wärmespeichervorrichtunq

Unter einem Sammelrohr kann ein Rohr verstanden werden, das ein geschlossenes Rohrende und ein offenes Rohrende aufweist. Bei aufrechter Anordnung des Sammelrohrs können sich das geschlossene Rohrende unten und das offene Rohrende oben befinden.

Seitlich hat das Sammelrohr mehrere Einmündungsöffnungen für Wärmetauscherrohre, um verdampftes Arbeitsfluid ins Rohrinnere zu leiten und darin zu sammeln. Die Einmündungen können auf einer längsverlaufenden Linie entlang dem Rohrmantel des Sammelrohrs angeordnet sein.

Das Sammelrohr verläuft insbesondere vertikal, das heißt in Schwerkraftrichtung, oder hat zumindest eine vertikale Komponente. Auch das Verteilerrohr verläuft insbesondere vertikal oder hat zumindest eine vertikale Komponente. Das Sammelrohr und das Verteilerrohr können insbesondere auch parallel zueinander verlaufen.

Unter einem oberen Bereich des Sammel- oder Verteilerrohrs kann ein Bereich oberhalb einer oberen Einmündung, zum Beispiel der obersten Einmündung, oder Verbindungsstelle, an der ein Wärmetauscherrohr in das Sammel- oder Verteilerrohr einmündet, verstanden werden. Unter einem unteren Bereich des Sammel- oder Verteilerrohrs kann ein Bereich unterhalb einer unteren Einmündung, zum Beispiel der untersten Einmündung, oder Verbindungsstelle, an der ein Wärmetauscherrohr in das Sammel- oder Verteilerrohr einmündet, verstanden werden.

Das Sammelrohr kann auch als ein Vorhaltebehälter bezeichnet werden, wobei der Vorhaltebehälter ausgebildet ist, um eine Flüssigkeit dauerhaft vorzuhalten, während er von dem verdampfen Arbeitsfluid durchströmt wird. Das Sammelrohr erfüllt somit neben dem Sammeln und Ableiten von verdampften Arbeitsfluid als eine weitere Aufgabe, das Vorhalten einer Flüssigkeit welche von dem verdampften Arbeitsfluid durchströmt werden kann.

Unter einer Flüssigkeit zum Befüllen des Sammelrohrs kann zum Beispiel Wasser oder eine wässrige Lösung verstanden werden. Zweckmäßigerweise kann die Flüssigkeit auch gleich dem Arbeitsfluid sein.

Das Sammelrohr kann so gestaltet und mit Flüssigkeit befüllt sein, dass die Druckdifferenzen vom Verteilerrohr über die verschiedenen Wärmetauscher zum Sammelrohr gleich sind. Verteilerseitig (auf der Seite des Verteilerrohrs) wird den verschiedenen Wärmetauschern flüssiges Arbeitsfluid mit verschiedenen Drücken zugeleitet. Dabei können insbesondere an unteren Wärmetauschern höhere Drücke anliegen als an oberen Wärmetauschern. Sammelseitig (auf der Seite des Sammelrohrs) übt die Flüssigkeit im Sammelrohr durch ihr Eigengewicht verschiedene Drücke zu den verschiedenen Wärmetauschern aus. Somit können wiederum an unteren Wärmetauschern höhere Drücke anliegen als an oberen Wärmetauschern, insbesondere kann ein von oben nach unten ansteigendes Druckgefälle im Sammelrohr ausgebildet sein. Stehen sowohl verteiler- als auch sammelseitig derartige von oben nach unten ansteigende Druckgefälle an den verschiedenen Wärmetauschern gegenüber, können Druckdifferenzen oder Druckabfälle vom Verteilerrohr über die verschiedenen Wärmetauscher zum Sammelrohr gleich sein. Sind Druckdifferenzen oder Druckabfälle über alle Wärmetauscher gleich, das heißt homogen, kann Arbeitsfluid vom Verteilerrohr in die Wärmetauscher mit gleicher Flussgeschwindigkeit einströmen und verdampftes Arbeitsfluid gleichmäßig von allen Wärmetauschern in das Sammelrohr abgeleitet werden. Dabei kann den Wärmespeicherkörpern durch den jeweiligen Wärmetauscher die gleiche Menge an Wärmeenergie entzogen werden. Unter gleichen Druckdifferenzen können insbesondere Druckdifferenzen verstanden werden, die um höchstens 10% voneinander abweichen.

Des Weiteren ist es vorteilhaft, wenn ein Höhenunterschied, der zwischen einer untersten Verbindung einer der Wärmetauscher mit dem Verteilerrohr und einer obersten Verbindung einer der Wärmetauscher mit dem Verteilerrohr ausgebildet ist, gleich einem Höhenunterschied ist, der zwischen einer untersten Verbindung einer der Wärmetauscher mit dem Sammelrohr und einer obersten Verbindung einer der Wärmetauscher mit dem Sammelrohr ausgebildet ist. Dies ist insbesondere dann der Fall, wenn die Wärmetauscher mit ihren Zuleitungen vom Verteilerrohr und ihren Ableitungen zum Sammelrohr parallel zueinander angeordnet sind. Hierfür müssen die Wärmetauscher mit ihren Zu- und Ableitungen nicht zwingend horizontal oder im rechten Winkel zum Sammel- und Verteilerrohr angeordnet sein. Liegt ein von oben nach unten im Verteilerrohr linear ansteigendes Druckgefälle an den verschiedenen Wärmetauschern an und sind die beiden Höhenunterschiede gleich, können homogene Druckdifferenzen oder Druckabfälle, die an den Wärmetauschern verteiler- und/oder sammelseitig anliegen, durch ein im Sammelrohr ausgebildetes Druckgefälle, das ebenso linear ansteigt wie das Druckgefälle im Verteilerrohr, erreicht werden. Mit bekannten Durchmessern des Verteilerrohrs, der Wärmetauscherrohre und des Sammelrohrs sowie den anliegenden Druckgefällen lassen sich die anliegenden Druckdifferenzen berechnen.

Zum Erreichen einer hohen Zuverlässigkeit beim Einstellen gleicher Druckdifferenzen kann es besonders vorteilhaft sein, zum Überprüfen eines Füllstands der Flüssigkeit im Sammelrohr einen Füllstandssensor vorzusehen. Bei einer derartigen Füllstandsüberprüfung oder Füllstandsmessung können Füllstandssensoren oder Füllstandsgrenzschalter oder entsprechende Kombinationsgeräte für eine kontinuierliche oder periodische Messung des Füllstands im Sammelrohr eingesetzt werden. Mit einer Messung mittels eines Füllstandssensors kann der Füllstand für die Standhöhe der Flüssigkeit im Sammelrohr in Längen-, Volumen- oder Masseneinheiten von einer Auswerteeinheit ausgegeben werden. Ist als Füllstandssensor ein Füllstandsgrenzschalter vorgesehen, wird ein Grenzfüllstand überwacht und bei Unter- und/oder Überschreiten eine entsprechende Messwert- oder Alarmausgabe ausgegeben. Somit kann insbesondere ein Mindest- und/oder Maximalfüllstand überprüft werden. Eine Füllstandshöhe im Sammelrohr kann hierbei definiert sein vom oberen Stand der Flüssigkeit zur untersten Einmündung von einem Wärmetauscherrohr in das Sammelrohr.

Eine weitere vorteilhafte Ausgestaltung der erfindungsgemäßen Wärmespeichervorrichtung ist dadurch gegeben, dass am Sammelrohr ein Nachfüllanschluss zum Nachfüllen von Flüssigkeit in das Sammelrohr vorgesehen ist. In bevorzugter Weise befindet sich der Nachfüllanschluss oberhalb von einer obersten Einmündung von einem Wärmetauscherrohr in das Sammelrohr. Das Nachfüllen von Flüssigkeit in das Sammelrohr kann automatisch auf Grundlage von Füllstandsmesswerten des Füllstandssensors erfolgen. Insbesondere kann bei dem Unterschreiten eines Mindestfüllstands Flüssigkeit nachgeführt werden, um einen gewünschten Flüssigkeitsfüllstand wieder herzustellen.

Für ein automatisches Steuern des Nachfüllens ist es besonders vorteilhaft, dass an dem Nachfüllanschluss ein Steuerelement, insbesondere ein Ventil, vorhanden ist, wobei das Steuerelement in Abhängigkeit von einem Messwert des Füllstandssensors gesteuert wird. Zudem können elektronische Steuermittel vorgesehen und dazu eingerichtet ein, das Steuerelement so zu steuern, dass ein Füllstand der Flüssigkeit im Sammelrohr stets in einem vorgegebenen Füllstandsbereich liegt.

Eine weitere Ausgestaltung der Erfindung besteht darin, dass am oberen Ende des Sammelrohrs ein Gas-/Flüssigkeitsseparator zum Separieren des verdampften Arbeitsfluids von der Flüssigkeit im Sammelrohr vorhanden ist. Der Gas-/Flüssigkeitsseparator befindet sich oberhalb der obersten Einmündung von einem Wärmetauscherrohr in das Sammelrohr. Der Separator weist einen Einlass für verdampftes Arbeitsfluid vom Sammelrohr an einem Ende und einen Dampfauslass für verdampftes Arbeitsfluid an einem anderen Ende auf. Der Separator entfernt Flüssigkeitspartikel aus dem verdampften Arbeitsfluid, beispielsweise Partikel größer als 10 Mikrometer. Der Gas-/Flüssigkeitsseparator kann auch als Gas-/Flüssigkeitsabscheider bezeichnet werden. Die Funktionsweise des Separators oder Abscheiders kann darin bestehen, dass das verdampfte Arbeitsfluid von Flüssigkeitstropfen der Flüssigkeit des Sammelrohrs durch eine Verringerung der Durchströmungsgeschwindigkeit abgetrennt wird. Unter einem derartigen Separator oder Abscheider kann auch eine Kondensatfalle verstanden werden, die ein Kondensat aus dem verdampften Arbeitsfluid auffängt. Zudem kann ein integrierter Kondensatableiter zum Ablassen des Kondensats vorgesehen sein, sobald ein bestimmter Kondensatfüllstand in der Kondensatfalle vorhanden ist.

Grundsätzlich können die Wärmetauscherrohre beliebig in das Sammelrohr einmünden. Eine bevorzugte Ausbildungsform der erfindungsgemäßen Wärmespeichervorrichtung besteht darin, dass die Wärmetauscherrohre sich ins Innere des Sammelrohrs erstrecken und insbesondere nach unten zeigende Einmündungsöffnungen aufweisen. Einmündungsbereiche im Sammelrohr, die an ihren Enden die Einmündungsöffnungen aufweisen, können im Sammelrohr nach unten gekrümmt verlaufen. Damit derartige Einmündungen im gesamten Sammelrohr ermöglicht sind, kann sich das Sammelrohr in einem unteren Bereich unterhalb von der untersten Einmündung eines der Wärmetauscherrohre in das Sammelrohr erstrecken. Die Einmündungsöffnungen können sich entlang einer Mittenachse des Sammelrohrs befinden und das verdampfte Arbeitsfluid kann somit gleichmäßig im Querschnitt des Sammelrohrs durch die darin befindliche Flüssigkeit aufsteigen.

Weiter im Hinblick auf die Einmündungen der Wärmetauscherrohre ins Innere des Sammelrohrs ist es besonders vorteilhaft, wenn der Umriss der Einmündungsöffnungen nicht in einer Ebene verläuft. Unter dem Umriss der Einmündungen ist das Profil der Einmündungsenden zu verstehen. Der Umriss oder das Profil der Einmündungsöffnungen kann in Einmündungsrichtung gezackt oder gewellt sein, wodurch erreicht werden kann, dass das verdampfte Arbeitsfluid nicht ungleichmäßig stoßweise oder abrupt mit großen Blasen austritt, sondern kontinuierlich an den einzelnen Zacken oder Wellen mit kleineren Blasen in die Flüssigkeit des Sammelrohrs eintritt. Dadurch wird ein gleichmäßiges und turbulenzarmes Aufsteigen von dem verdampften Arbeitsfluid in der Flüssigkeit im Sammelrohr gewährleistet.

Eine weitere vorteilhafte Ausgestaltung der erfindungsgemäßen Wärmespeichervorrichtung besteht darin, dass die Wärmetauscherrohre drei separat aufeinander folgende Rohrabschnitte umfassen, mit einem ersten Rohrabschnitt als Zuleitung für das flüssige Arbeitsfluid vom Verteilerrohr zu den Wärmespeichereinheiten, einem zweiten Rohrabschnitt, der die aufeinander gestapelten Wärmespeichereinheiten mindestens teilweise durchläuft und in dem das Arbeitsfluid verdampft, und einem dritten Rohrabschnitt als Ableitung des verdampften Arbeitsfluids zum Sammelrohr. Der erste und dritte Rohrabschnitt können dabei einen gleichen Durchmesser aufweisen, der größer ist als der Durchmesser des zweiten Rohrabschnitts. Die einzelnen Rohrabschnitte können mittels Verpressen, Verlöten oder Verschweißen miteinander verbunden sein. Die Rohrabschnitte können zwischen dem Verteiler- und Sammelrohr gestuft angeordnet sein, wobei sich der dritte Rohrabschnitt oberhalb des zweiten und ersten Rohrabschnitts befindet und der zweite Rohrabschnitt sich oberhalb des ersten Rohrabschnitts befindet.

Für die Anordnung der Wärmetauscherrohre kann es besonders vorteilhaft sein, dass der zweite Rohrabschnitt aus mehreren Einzelrohren besteht, die jeweils mit dem ersten und dritten Rohrabschnitt verbunden sind. Der erste Rohrabschnitt leitet das flüssige Arbeitsfluid somit vom Verteilerrohr in jedes der Einzelrohre, welche die aufeinander gestapelten Wärmespeichereinheiten mindestens teilweise durchlaufen und in denen jeweils das Arbeitsfluid verdampft. Die in den Wärmespeichereinheiten gespeicherte Wärmeenergie kann über das gesamte Volumen der jeweiligen Wärmespeichereinheiten auf die Vielzahl von Einzelrohren effizient übertragen werden. Die Einzelrohre des zweiten Rohrabschnitts münden alle im dritten Rohrabschnitt, der das verdampfte Arbeitsfluid dem Sammelrohr zuführt.

Bezüglich der Wärmetauscherrohre ist eine weitere vorteilhafte Ausgestaltung der Erfindung dadurch gegeben, dass der zweite Rohrabschnitt durch einen ersten U-förmigen Teilabschnitt mit dem ersten Rohrabschnitt und durch einen zweiten U-förmigen Teilabschnitt mit dem dritten Rohrabschnitt verbunden ist, wobei der zweite U-förmige Teilabschnitt vom ersten Rohrabschnitt und der zweite U-förmige Teilabschnitt vom dritten Rohrabschnitt jeweils von unten nach oben verläuft. Der zweite Rohrabschnitt, der aus mehreren Einzelrohren bestehen kann, weist durch seine doppelte U-förmige Ausgestaltung eine größere Länge auf, als die direkte Distanz zwischen dem ersten und dritten Rohrabschnitt beträgt. Bei einem temparaturbedingten Ausdehnen der zweiten Rohrabschnitte können diese sich nach außen ausdehnen, ohne dass Spannungen in großem Maß auf den ersten und dritten Rohrabschnitt übertragen werden. Durch den doppelt U-förmigen Verlauf des zweiten Teilabschnitts wird die abgestufte Lage des ersten zum dritten Rohrabschnitt ermöglicht. Anstelle des doppelten U-förmigen Verlaufs kann alternativ auch ein einfach oder mehrfach S-förmiger Verlauf vorgesehen sein.

Eine bevorzugte Ausführungsform der Erfindung besteht darin, dass die Flüssigkeit im Sammelrohr in Sättigungstemperatur vorgehalten wird und dass das vom Wärmetauscher verdampfte Arbeitsfluid soweit über seine Sättigungstemperatur erhitzt wird, dass beim Durchströmen der Flüssigkeit im Sammelrohr mehr Flüssigkeit verdampft als Arbeitsfluid kondensiert. Somit wird erreicht, dass von dem verdampften Arbeitsfluid möglichst wenig Kondensat im Sammelrohr ausfällt.

Jeder Wärmetauscher kann jeweilige hydraulische Anschlüsse zum Einleiten von Arbeitsfluid in die Wärmetauscherrohre und zum Ausleiten von Arbeitsfluid aus den Wärmetauscherrohren dieses Wärmetauschers aufweisen. Die hydraulischen Anschlüsse können an einer Verteilerleitung gebildet sein, so dass Arbeitsfluid von der Verteilerleitung über die verschiedenen hydraulischen Anschlüsse zu den verschiedenen Wärmetauschern gelangt. In gleicher Weise können an einer Sammelleitung hydraulische Anschlüsse vorhanden sein, so dass das Arbeitsfluid nach Durchströmen der Wärmetauscher in der Sammelleitung zusammengeführt und weitergeleitet wird. Alle hydraulischen Anschlüsse der Wärmetauscher befinden sich vorzugsweise an derselben Seite der Wärmespeichervorrichtung. Eine solche Anordnung bietet hinsichtlich Wartungsarbeiten und einer besseren Zugänglichkeit wesentliche Vorteile.

### Wärmetauscherrohre

Der Wärmespeicherkörper kann Vertiefungen oder Aufnahmekanäle zum Aufnehmen der Wärmetauscherrohre umfassen. Eine Vertiefung kann allgemein so geformt sein, dass ein Wärmetauscherrohr teilweise darin aufgenommen wird. Beispielsweise können die Vertiefungen rillenförmig sein und einen halbkreisförmigen Querschnitt oder einen kreissegmentförmigen Querschnitt haben. Wärmetauscherrohre mit kreisförmigem Querschnitt können hier herausstehend aufgenommen werden. Prinzipiell können die Vertiefungen aber auch so geformt sein, dass ein Wärmetauscherrohr vollständig darin aufgenommen wird. Ein Aufnahmekanal unterscheidet sich von einer Vertiefung darin, dass er im Querschnitt zu allen Seiten begrenzt ist. Ein Wärmetauscherrohr in einem Aufnahmekanal grenzt also an allen Mantelflächen des Aufnahmekanals an den Wärmespeicherkörper oder an einen von mehreren Wärmespeicherkörpern an.

Jede Wärmespeichereinheit kann auch mindestens zwei Wärmespeicherkörper aufweisen, welche jeweils Vertiefungen aufweisen. Zwei Wärmespeicherkörper derselben Wärmespeichereinheit oder zwei Wärmespeicherkörper von zwei aufeinander gestapelten Wärmespeichereinheiten sind aneinander gesetzt. Hierdurch bilden die Vertiefungen der Wärmespeicherkörper die Aufnahmekanäle für die Wärmetauscherrohre.

Die Wärmespeicherkörper können eine beliebige Form haben. Beispielsweise kann ein Wärmespeicherkörper mehrere voneinander beabstandete Zylinderkörper umfassen. Alternativ kann jeder Wärmespeicherkörper eine Wärmespeicherplatte sein oder umfassen. Zwei Wärmespeicherplatten können ebene Kontaktflächen haben, an welchen sie sich berühren. Die ebene Kontaktfläche von jeder Wärmespeicherplatte wird durch ihre Vertiefungen unterbrochen. Die Vertiefungen sind in den Wärmespeicherplatten so angeordnet, dass jeweils eine Vertiefung von einer Wärmespeicherplatte auf eine Vertiefung der anderen Wärmespeicherplatte trifft. Sind die Vertiefungen jeweils halbkreisförmig, können so die Vertiefungen von zwei Wärmespeicherplatten aneinandergesetzt einen kreisförmigen Aufnahmekanal bilden. Die Wärmespeicherkörper können vorzugsweise aus Metall, insbesondere aus Stahl bestehen oder dieses zumindest zu mehr als 50 Vol.-% umfassen.

Jeweils zwei Wärmespeicherkörper, zwischen denen Wärmetauscherrohre aufgenommen sind, sind aufeinander gestapelt. Sie sind also nicht nebeneinander, sondern übereinander angeordnet, so dass eine Gewichtskraft des oberen der zwei Wärmespeicherkörper diesen auf den unteren der zwei Wärmespeicherkörper drückt. Dies bewirkt an Bereichen zwischen den Vertiefungen der Wärmespeicherkörper einen weitgehend dichtenden Kontakt. Dadurch wird im Wesentlichen verhindert, dass geschmolzenes Wärmetransfermaterial aus der Wärmespeichervorrichtung herausläuft. Zudem wird Wärmetransfermaterial, das sich zwischen zwei Wärmespeicherkörpern, aber nicht in deren Vertiefungen, befindet, teilweise in die Vertiefungen hineingedrückt, wo es einen Kontakt zwischen dem in dieser Vertiefung aufgenommenen Wärmetauscherrohr und dem oder den umgebenden Wärmespeicherkörper(n) herstellt.

Beim Zusammenbau der Wärmespeichervorrichtung werden auf einen Wärmespeicherkörper ein Wärmetauscher und sodann ein weiterer Wärmespeicherkörper gesetzt. Hierbei sollte gewährleistet werden, dass die Vertiefungen beider Wärmespeicherkörper aufeinander passen; ansonsten würde der obere der beiden Wärmespeicherkörper auf den Wärmetauscherrohren aufliegen und könnte diese beschädigen. Für eine korrekte Ausrichtung und um Beschädigungen zu vermeiden, kann einer der zwei Wärmespeicherkörper (vorzugsweise der untere der beiden Wärmespeicherkörper) auf derjenigen Seite, an welcher die Vertiefungen sind, mehrere Erhebungen aufweisen. Ein anderer der zwei Wärmespeicherkörper (vorzugsweise der obere der beiden Wärmespeicherkörper) kann an Orten, die den Erhebungen entsprechen, Aufnahmen aufweisen. Im zusammengesetzten Zustand greifen die Erhebungen in die Aufnahmen ein. Dadurch wird eine korrekte Ausrichtung zueinander gewährleistet. Vorzugsweise sind die Erhebungen höher als ein Radius der Wärmetauscherrohre, um ein Beschädigen der Wärmetauscherrohre beim Zusammensetzen der Wärmespeichereinheit zu vermeiden.

Die Wärmetauscherrohre können eine Einlassseite zum Einleiten von Arbeitsfluid und eine Auslassseite zum Herauslassen von Arbeitsfluid aufweisen. Die Auslassseite kann gegenüberliegend zur Einlassseite sein. Im Bereich der Einlassseite wird das Arbeitsfluid schlagartig stark erwärmt. Hierdurch drohen nachteilige Materialbelastungen. Zudem wird der Wärmespeicherkörper im Bereich der Einlassseite in der Regel stärker entladen, d.h. gekühlt. Um diesen Effekt zu reduzieren, kann es bevorzugt sein, wenn das Wärmetransfermaterial nicht im Bereich der Einlassseite zwischen den Wärmetauscherrohren und dem Wärmespeicherkörper angeordnet ist. Das Wärmetransfermaterial kann vielmehr auf einen Bereich hinter der Einlassseite (also auf einen Bereich in Richtung der Auslassseite) beschränkt sein. Der Bereich der Einlassseite, an welcher sich kein Wärmetransfermaterial befindet, kann definiert sein als ein Bereich ab der Einlassseite in Richtung einer gegenüberliegenden Seite, wobei dieser Bereich kleiner als 20%, vorzugsweise kleiner als 10%, der Gesamtlänge von der Einlassseite zur gegenüberliegenden Seite ist.

Jeder Wärmespeicherkörper ist mit einer seiner Seiten Wärmetauscherrohren zugewandt. Hierbei kann es sich um die Wärmetauscherrohre derselben Wärmespeichereinheit oder um Wärmetauscherrohre von einer benachbarten Wärmespeichereinheit handeln. Eine gegenüberliegende Seite von jedem Wärmespeicherkörper ist einem elektrischen Heizer zugewandt oder kontaktiert diesen. Hierbei kann es sich um den elektrischen Heizer derselben Wärmespeichereinheit oder den elektrischen Heizer einer benachbarten Wärmespeichereinheit handeln. Es kann vorgesehen sein, dass jeder Wärmespeicherkörper nur an seiner den Wärmetauscherrohren zugewandten Seite an Wärmetransfermaterial angrenzt, nicht aber an der gegenüberliegenden Seite, die einem elektrischen Heizer zugewandt ist. Hierdurch wird berücksichtigt, dass der Wärmetransfer zu den Wärmespeicherrohren entscheidend für den Wirkungsgrad der Wärmespeichervorrichtung ist, dass aber nicht der Wärmetransfer vom elektrischen Heizer entscheidend für den Wirkungsgrad ist. Auf ein Wärmetransfermaterial am elektrischen Heizer zu verzichten, ist insbesondere aus Kostensicht vorteilhaft.

### Allgemeine Eigenschaften

Als Arbeitsfluid kann prinzipiell eine beliebige Flüssigkeit oder ein beliebiges Gas verwendet werden. Das Fluid kann insbesondere auch einen Phasenübergang beim Durchströmen eines Wärmetauschers erfahren, also aus einem flüssigen Zustand in die Gasform verdampfen. Beispiele für Arbeitsfluide sind Wasser oder wasserhaltige Lösungen. Das Arbeitsfluid strömt nicht frei an oder durch die Wärmespeichereinheiten, sondern ausschließlich innerhalb der Wärmetauscherrohre.

In der vorliegenden Beschreibung wird häufig eine Komponente der Wärmespeichervorrichtung im Singular beschrieben. Diese Ausführungen können auch für mehrere oder sämtliche der gleichartigen Komponenten gelten: Beispielsweise können die Beschreibungen des Wärmespeicherkörpers auch für mehrere oder sämtliche Wärmespeicherkörper der Wärmespeichervorrichtung gelten. Jede Wärmespeichereinheit kann außer den hier beschriebenen Komponenten auch weitere Komponenten umfassen. Eine Formulierung, dass ein Wärmespeicherkörper benachbart zu einem elektrischen Heizer ist, soll so verstanden werden, dass hierzwischen auch weitere Komponenten vorhanden sein können, beispielsweise eine elektrische Isolationsschicht.

Jede Wärmespeichereinheit kann zusätzlich zu dem genannten elektrischen Heizer einen oder mehrere weitere, insbesondere gleich gebildete, elektrische Heizer aufweisen. Zudem kann jede Wärmespeichereinheit zusätzlich zu dem genannten Wärmespeicherkörper einen oder mehrere weitere, insbesondere gleich gebildete, Wärmespeicherkörper umfassen. Auch kann jede Wärmespeichereinheit zusätzlich zu dem genannten Wärmetauscher einen oder mehrere weitere, insbesondere gleich gebildete, Wärmetauscher umfassen.

Die plattenförmigen Wärmespeicherkörper sind vorzugsweise jeweils einstückig gebildet und können aus einem prinzipiell beliebigen Festkörper bestehen, sofern dessen spezifische Wärmekapazität und Wärmeleitfähigkeit der beabsichtigten Anwendung genügen. Vorzugsweise umfasst jede Wärmespeichereinheit eine Metallplatte oder ist insbesondere durch genau eine Metallplatte gebildet. Als Metall kann insbesondere Stahl oder eine Stahllegierung verwendet werden. Bei verhältnismäßig geringen Kosten stellen diese eine relativ hohe spezifische Wärmekapazität und Wärmeleitfähigkeit zur Verfügung.

### Stapelung der Komponenten der Wärmespeichervorrichtunq

Eine Stapelung übereinander ist hinsichtlich der thermischen Ausdehnung der genannten Komponenten wichtig und vorteilhaft. So besteht im Allgemeinen die Gefahr, dass aufgrund thermischer Ausdehnungen elektrische Verbindungen und/oder Fluidleitungen stark belastet werden können, womit die Lebensdauer sinkt. Bei übereinander angeordneten Komponenten ist jedoch die thermische Ausdehnung in Stapelungsrichtung verhältnismäßig gering, da die Plattenform definitionsgemäß eine geringe Höhe im Vergleich zur Breite und Länge vorgibt.

Allgemein kann die Stapelung übereinander so verstanden werden, dass die genannten (plattenförmigen) Komponenten einer Wärmespeichereinheit jeweils mit ihrer Grundfläche (das heißt ihrer größten Seite) einander berühren. Eine Stapelungsrichtung kann vertikal sein, das heißt in Schwerkraftrichtung. Dies kann insbesondere hinsichtlich der Strömungseigenschaften des Arbeitsfluids vorteilhaft sein.

Der Stapel der Wärmespeichervorrichtung kann mehrere übereinander angeordnete Stapeleinheiten oder Wärmespeichereinheiten umfassen, wobei jede Stapeleinheit von unten nach oben die folgenden Komponenten umfasst: einen der Wärmetauscher; einen der Wärmespeicherkörper; einen der elektrischen Heizer und einen der Wärmespeicherkörper. Auf den letztgenannten Wärmespeicherkörper dieser Stapeleinheit folgt somit die Wärmetauschereinheit einer nächsten Stapeleinheit. Durch eine solche Anordnung grenzt ein Heizer stets an zwei Wärmespeicherkörper an, so dass Wärme besonders effektiv übertragen werden kann. Zudem ist durch diese Anordnung definiert, dass jede der Wärmespeicherkörper sowohl an einen Wärmetauscher als auch an einen elektrische Heizer angrenzt, so dass jeder Wärmespeicherkörper effektiv geladen und entladen werden kann (d. h. Wärme aufnehmen und Wärme abgeben kann).

Die genannten Komponenten einer Wärmespeichereinheit können insbesondere übereinander gelegt sein, ohne dass zusätzliche Verbindungs- oder Befestigungsmittel vorhanden sind. So können diese Komponenten durch ihr Eigengewicht zusammenhalten und können gleichzeitig thermischen Ausdehnungen nachgeben. Prinzipiell können aber auch zusätzliche Befestigungsmittel vorhanden sein.

Jede Wärmespeichereinheit kann auch weitere Wärmespeicherkörper aufweisen. Hierbei können einer oder zwei der Wärmespeicherkörper die beschriebenen Vertiefungen zum Aufnehmen der Wärmetauscherrohre aufweisen. Diese Wärmespeicherkörper zusammen mit den dazwischen angeordneten Wärmetauscherrohren haben also eine äußere Form, die durch die Wärmespeicherkörper bestimmt wird. Deren äußere Flächen (insbesondere in Stapelungsrichtung) können eben sein, so dass eine Plattenform entsteht und eine Stapelung leicht möglich ist. Es können nun pro Wärmespeichereinheit ein oder mehrere weitere Wärmespeicherkörper vorgesehen sein, welche insbesondere plattenförmig sind. Dadurch können sie leicht und weitgehend ohne Luftlücken aufeinandergestapelt werden. Der oder die weiteren Wärmespeicherkörper können beispielsweise zwischen einem der vorgenannten Wärmespeicherkörper und den elektrischen Heizer vorhanden sein.

Die plattenförmigen Wärmespeicherkörper und die plattenförmigen elektrischen Heizer können jeweils eine übereinstimmende Grundfläche haben. Indem die Grundflächen die gleichen Abmessungen haben, führt eine Stapelung zu einem besonders effizienten Wärmetransfer.

Die Form einer Wärmespeichereinheit und die Anordnung der Komponenten einer Wärmespeichereinheit innerhalb dieser können prinzipiell beliebig erfolgen. Die Vorteile der vorliegenden Offenbarung ergeben sich bereits, wenn mehrere Wärmespeichereinheiten übereinander (in Schwerkraftsrichtung) angeordnet sind. In vielen beschriebenen Ausführungsformen erstreckt sich eine Wärmespeichereinheit (beziehungsweise ein elektrischer Heizer, ein Wärmespeicherkörper und ein Wärmetauscher) im Wesentlichen in horizontaler Richtung. Alternativ kann aber auch eine schräge oder vertikale Erstreckungsrichtung gewünscht sein.

Bevorzugte Varianten des erfindungsgemäßen Verfahrens ergeben sich durch bestimmungsgemäßen Gebrauch der erfindungsgemäßen Wärmespeichervorrichtung. Zudem sind die beschriebenen Verfahrensvarianten auch als Varianten der erfindungsgemäßen Wärmespeichervorrichtung anzusehen.

### Kraftwerk

Die Erfindung betrifft auch ein Kraftwerk zum Erzeugen von elektrischer Energie aus Wärmeenergie, die von einer erfindungsgemäßen Wärmespeichervorrichtung abgegeben wird. Das Kraftwerk kann eine Turbine, insbesondere eine Dampfturbine, und einen Generator aufweisen. Mit einem solchen Kraftwerk wird elektrische Energie aus einem externen Stromnetz aufgenommen und mit der Wärmespeichervorrichtung in Form von Wärmeenergie gespeichert. Zudem kann die gespeicherte Wärmeenergie wieder in elektrische Energie gewandelt und an das externe Stromnetz ausgegeben werden. Mit einer Steuereinheit kann eingestellt werden, ob momentan mehr elektrische Energie aus dem Stromnetz aufgenommen oder an das Stromnetz abgegeben wird. Dadurch können Schwankungen einer Energiemenge im Stromnetz zumindest teilweise kompensiert werden.

Weitere Eigenschaften und Vorteile der Erfindung werden nachstehend mit Bezug auf die beigefügten schematischen Figuren beschrieben.
- Fig. 1: zeigt ein Ausführungsbeispiel einer erfindungsgemäßen Wärmespeichervorrichtung in einer Perspektivdarstellung.
- Fig. 2: zeigt die Wärmespeichervorrichtung von Fig. 1 in einer Schnittansicht.
- Fig. 3: zeigt einen Wärmespeicherkörper der Wärmespeichervorrichtung von Fig. 1 in einer Perspektivansicht.
- Fig. 4: zeigt einen Wärmetauscher der Wärmespeichervorrichtung von Fig. 1 in einer Perspektivansicht.
- Fig. 5: zeigt einen Ausschnitt einer Wärmespeichereinheit der Wärmespeichervorrichtung von Fig. 1 in einer Perspektivansicht.
- Fig. 6: zeigt einen Ausschnitt der Wärmespeichervorrichtung von Fig. 1 in einer Schnittansicht.
- Fig. 7: zeigt eine Wärmespeichereinheit der Wärmespeichervorrichtung von Fig. 1 in einer Perspektivansicht.
- Fig. 8: zeigt in einer Perspektivansicht einen elektrischen Heizer der Wärmespeichervorrichtung von Fig. 1.
- Fig. 9: zeigt in einer Perspektivansicht einen alternativen elektrischen Heizer der Wärmespeichervorrichtung von Fig. 1.
- Fig. 10: zeigt in einer Perspektivansicht eine Wärmespeichereinheit der Wärmespeichervorrichtung von Fig. 1.
- Fig. 11: zeigt in einer Perspektivansicht einen Einmündungsbereich eines Wärmetauscherrohrs in das Sammelrohr der Wärmespeichervorrichtung von Fig. 1.
- Fig. 12: zeigt eine schematische Darstellung eines elektrischen Heizers einer Wärmespeichereinheit.
- Fig. 13: zeigt schematisch einen Spannungsverlauf der Spannungsversorgung eines elektrischen Heizers.
- Fig. 14: zeigt schematisch einen gesteuerten Spannungsverlauf der Spannungsversorgung eines elektrischen Heizers.
- Fig. 15: zeigt eine schematische Darstellung eines erfindungsgemäßen Kraftwerks.
- Fig. 16: zeigt eine schematische Darstellung eines weiteren erfindungsgemäßen Kraftwerks.
Gleiche und gleichwirkende Komponenten sind in den Figuren in der Regel mit übereinstimmendem Bezugszeichen gekennzeichnet.

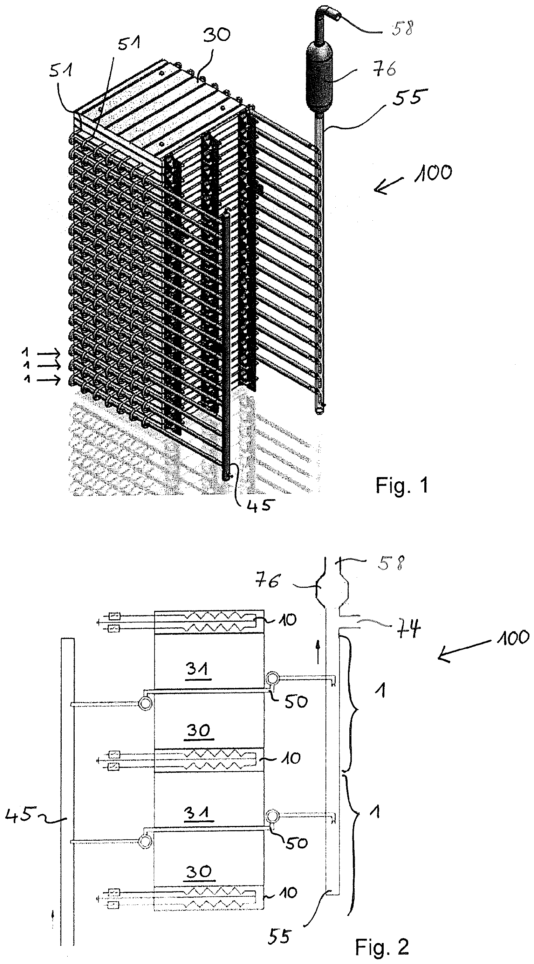

Ein Ausführungsbeispiel einer erfindungsgemäßen Wärmespeichervorrichtung 100 wird zunächst mit Bezug auf die Figuren 1 und 2 beschrieben. Fig. 1 zeigt die Wärmespeichervorrichtung 100 in einer Perspektivdarstellung, während Fig. 2 einen Teil davon in Schnittansicht zeigt. Die Wärmespeichervorrichtung 100 dient dem Speichern von Energie, welche zunächst in elektrischer Form vorliegt. Die elektrische Energie wird in Wärmeenergie umgewandelt und gespeichert. Eine Entnahme der gespeicherten Energie ist durch die Abfuhr von erhitztem Arbeitsfluid möglich.

Die Wärmespeichervorrichtung 100 umfasst mehrere Wärmespeichereinheiten 1, die übereinander gestapelt sind. Jede Wärmespeichereinheit 1 umfasst einen elektrischen Heizer 10. Dieser wandelt elektrische Energie in Wärmeenergie um, vorzugsweise im Wesentlichen vollständig, das heißt mehr als 90% der vom elektrischen Heizer 10 aufgenommenen Energie wird in Wärmeenergie umgewandelt. Jede Wärmespeichereinheit 1 umfasst weiterhin mindestens einen, im dargestellten Beispiel zwei, Wärmespeicherkörper 30, 31. Diese können Metallkörper oder -platten sein, welche der Speicherung von Wärmeenergie dienen. Die Wärmespeicherkörper 30, 31 sind benachbart zum elektrischen Heizer 10 (oder zu einem elektrischen Heizer 10 einer benachbarten Wärmespeichereinheit 1), um Wärmeenergie vom elektrischen Heizer 10 aufzunehmen. Jede Wärmespeichereinheit 1 umfasst schließlich auch einen Wärmetauscher 50, welcher mehrere Wärmetauscherrohre 51 aufweist. Jeder Wärmetauscher 50 ist benachbart zu mindestens einem, im dargestellten Beispiel zwei, der Wärmespeicherkörper 30, 31. Dadurch wird Wärmeenergie vom Wärmespeicherkörper 30, 31 auf die Wärmetauscherrohre 51 und ein darin befördertes Arbeitsfluid übertragen.

Über ein Verteilerrohr oder -leitung 45 (siehe Fig. 2) wird Arbeitsfluid auf die verschiedenen Wärmetauscher 50 verteilt. Nach Durchströmen der Wärmetauscher 50 wird das Arbeitsfluid in einer Sammelrohr oder -leitung 55 gesammelt und weitergeleitet. Das hiermit erhitzte Arbeitsfluid kann beispielsweise zur elektrischen Stromerzeugung genutzt werden, indem es insbesondere eine oder mehrere Turbinen antreibt.

### Wärmetransfer vom Wärmespeicherkörper zum Wärmetauscher

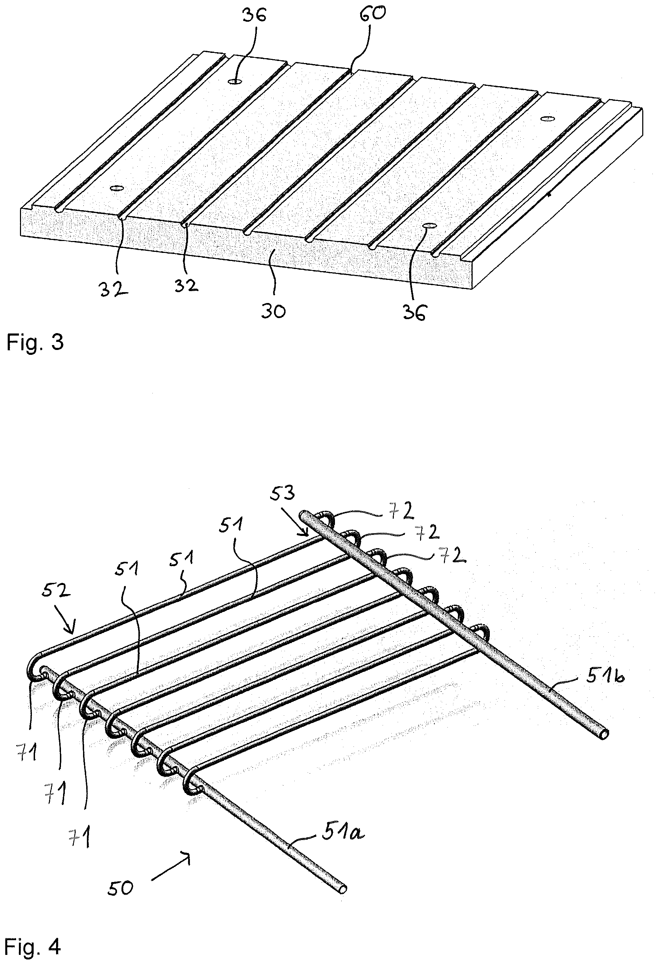

Wärmeenergie sollte von einem der Wärmespeicherkörper 30, 31 auf benachbarte Wärmetauscherrohre 51 in möglichst großen Mengen besonders schnell übertragen werden können, damit ein hoher Wirkungsgrad der Wärmespeichervorrichtung 100 erreicht wird. Hierfür wichtige Eigenschaften werden mit Bezug auf die Figuren 3 und 4 beschrieben.

Fig. 3 zeigt eine Perspektivdarstellung eines Wärmespeicherkörpers 30 der Wärmespeichervorrichtung 100. Der Wärmespeicherkörper 30 besteht aus oder umfasst eine Metallplatte. An einer zum elektrischen Heizer zeigenden Seite (in Fig. 3 die Unterseite) kann der Wärmespeicherkörper 30 eben sein. Auf der gegenüberliegenden Seite (in Fig. 3 die Oberseite) können Vertiefungen 32 zum Aufnehmen der Wärmetauscherrohre 51 vorhanden sein. Die Vertiefungen 32 können jeweils eine Rille mit etwa halbkreisförmigem Querschnitt umfassen. Werden zwei solcher Wärmespeicherkörper 30, 31 so aneinandergesetzt, dass ihre jeweiligen Vertiefungen aufeinander treffen, so bildet jedes Paar an Vertiefungen 32 einen Aufnahmekanal für ein Wärmetauscherrohr.

Ein zugehöriger Wärmetauscher 50 ist in Fig. 4 gezeigt. Der Wärmespeicher 50 umfasst mehrere Wärmetauscherrohre 51, deren Querschnitt gerade so gewählt ist, dass sie in einen Aufnahmekanal zwischen zwei Wärmespeicherkörpern 30, 31 passen.

Aufgrund von Fertigungstoleranzen ist es aber kaum möglich, Lufträume zwischen den Wärmetauscherrohren 51 und den Wärmespeicherkörpern 30, 31 vollständig zu vermeiden. Lufträume vermiesen aber den Wärmetransfer. Auch unterschiedliche Temperaturen zwischen den Wärmespeicherkörpern 30, 31 und den Wärmetauscherrohren 51 oder unterschiedliche Temperaturen innerhalb eines Wärmespeicherkörpers 30 oder innerhalb eines Wärmespeicherrohrs 51 führen zu thermischen Ausdehnungen, welche zu Lufträumen führen können. Weil die Wärmespeicherkörper 30, 31 im Betrieb über mehrere Hundert °C erwärmt und abgekühlt werden, sind thermische Ausdehnungen hochrelevant für die Entstehung von Lufträumen.

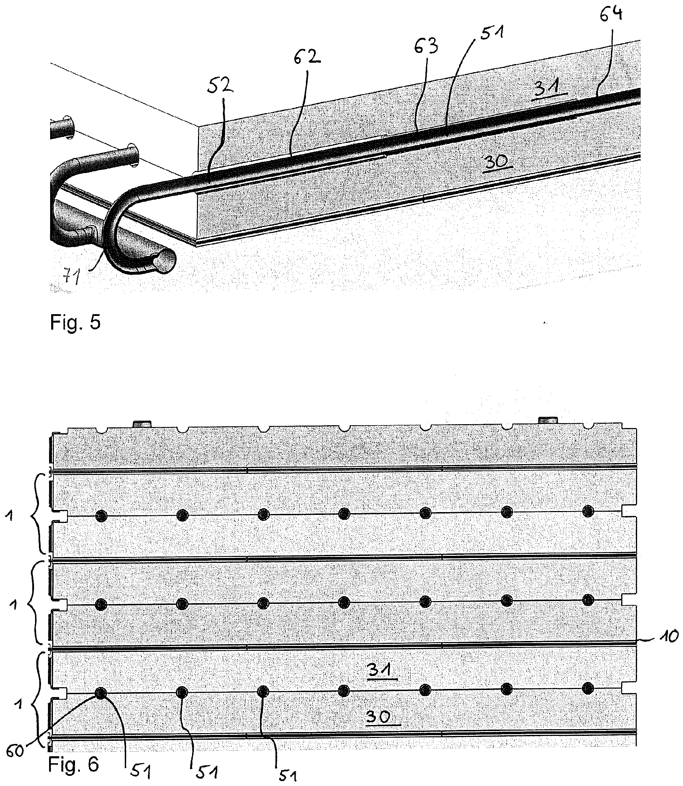

Solche Lufträume können weitestgehend durch ein Wärmetransfermaterial 60 vermieden werden, welches zwischen den Wärmetauscherrohren 51 und dem Wärmespeicherkörper 30, 31 angeordnet wird (siehe Fig. 6). Das Wärmetransfermaterial 60 ist vorzugsweise ein Metall, beispielsweise Zink oder Aluminium. Es hat eine Schmelztemperatur, die niedriger ist als die Schmelztemperaturen der Wärmetauscherrohre 51 und des Wärmespeicherkörpers 30, 31. Im Betrieb der Wärmespeichervorrichtung 100 wird das Wärmetransfermaterial 60 so weit erhitzt, dass es erweicht oder flüssig wird. Im flüssigen Zustand kann das Wärmetransfermaterial 60 Lücken zwischen den Wärmetauscherrohren 51 und den Wärmespeicherkörpern 30, 31 füllen oder vermeiden. Insbesondere spielen unterschiedliche thermische Ausdehnungen keine wesentliche Rolle mehr, weil das Wärmetransfermaterial 60 im geschmolzenen Zustand variable Formen annehmen kann. Somit wird der Wärmetransfer entscheidend verbessert.

Das Wärmetransfermaterial 60 ist im Beispiel von Fig. 3 eine Beschichtung auf einem oder beiden der Wärmespeicherkörper 30, 31. Alternativ oder ergänzend kann das Wärmetransfermaterial 60 auch eine Beschichtung auf den Wärmetauscherrohren 51 sein. Die Beschichtungen sind vorzugsweise dünner als 1mm, während ein Wärmespeicherkörper 30 eine Höhe (in Stapelungsrichtung) von ca. 5cm bis 25cm hat, so dass die Beschichtung in Fig. 3 auf dem Wärmespeicherkörper 30 nur schwach zur Geltung kommt. Die Beschichtung 60 ist zumindest in den Vertiefungen 32 vorgesehen. Die Flächen des Wärmespeicherkörpers 30, 31 zwischen den Vertiefungen 32 können entweder unbeschichtet oder ebenfalls mit Wärmetransfermaterial 60 beschichtet sein.

Alternativ zu einer Beschichtung kann das Wärmetransfermaterial 60 auch durch eine Metallplatte gebildet sein (nicht dargestellt). Die Metallplatte kann in ihrer Form an die Vertiefungen 32 oder die Wärmetauscherrohre 51 angepasst sein, wobei dies nicht zwingend erforderlich ist. Vor der ersten Verwendung der Wärmespeichervorrichtung stellt diese Metallplatte noch keinen im Wesentlichen luftfreien Kontakt zwischen den Wärmetauscherrohren 51 und den Wärmespeicherkörpern 30, 31 her. Allerdings hat die Metallplatte einen niedrigeren Schmelzpunkt als die umgebenden Metalle. Dadurch schmilzt die Metallplatte bei der erstmaligen Verwendung der Wärmespeichervorrichtung 100 und füllt im Wesentlichen den Raum zwischen den Wärmetauscherrohren 51 und den Wärmespeicherkörpern 30, 31. Somit werden Lufträume im Wesentlichen geschlossen.

Das Wärmetransfermaterial 60 muss nicht über die gesamte Länge der Vertiefungen 32 oder über die gesamte Länge der Wärmetauscherrohre 51 an diese angrenzen. Die Wärmetauscherrohre 51 haben eine Einlassseite 52, über welche Arbeitsfluid einströmt, und eine Auslassseite 53, über welche das Arbeitsfluid ausströmt. Der Bereich an der Einlassseite 52 kann nun frei von Wärmetransfermaterial 60 sein. Dadurch wird der Wärmetransfer oder die Wärmeleitfähigkeit an der Einlassseite reduziert. An der Einlassseite 52 wird Arbeitsfluid schlagartig erwärmt, wodurch ungünstige Materialbelastungen entstehen. Zudem wird den Wärmespeicherkörpern 30, 31 ungleichmäßig Wärme entzogen, so dass die Wärmespeicherkörper 30, 31 an der Einlassseite 52 um mehrere Hundert °C kühler sein könnten als an der Auslassseite 53. Dieser unerwünschte Effekt wird zumindest reduziert, wenn der Wärmetransfer durch Wärmetransfermaterial 60 nur an anderen Bereichen als an der Einlassseite 52 erhöht wird.

Während bei den Figurenbeispielen zwei Wärmespeicherkörper 30, 31 einen Wärmetauscher 50 umgeben, können auch eine andere Anzahl an Wärmespeicherkörpern hierfür genutzt werden. So kann ein einziger Wärmespeicherkörper Aufnahmekanäle, beispielsweise durchgängige Bohrungen, umfassen, in welche die Wärmetauscherrohre eingeführt werden.

### Ausrichtung benachbarter Wärmespeicherkörper zueinander

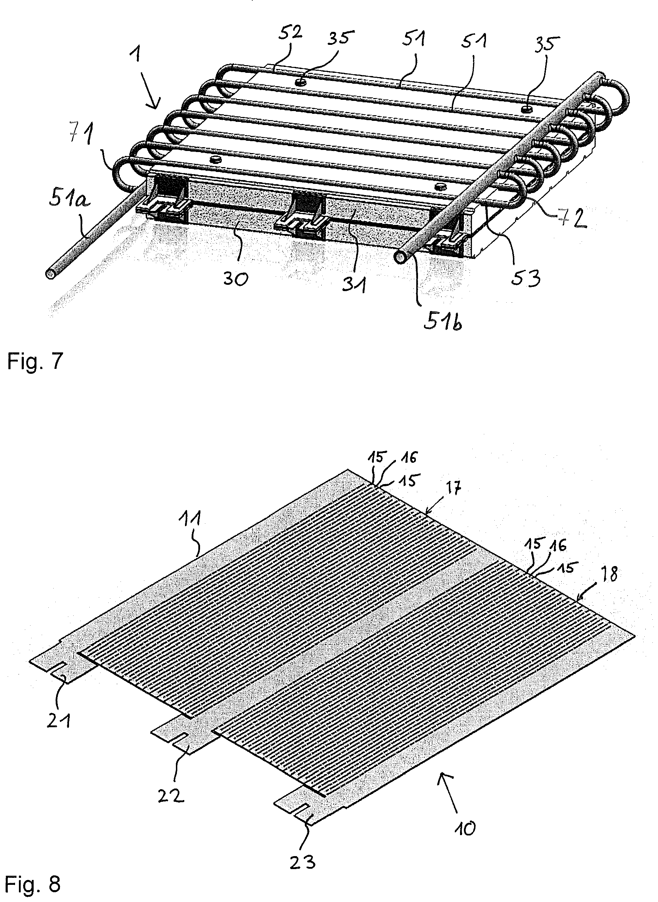

Fig. 7 zeigt eine Wärmespeichereinheit 1 der Wärmespeichervorrichtung 100 in einer Perspektivansicht. Die Vertiefungen 32 von zwei aneinander grenzenden Wärmespeicherkörpern 30, 31 müssen zueinander ausgerichtet sein, damit jeweils zwei Vertiefungen 32 beider Wärmespeicherkörper 30, 31 gemeinsam einen Aufnahmekanal für ein Wärmespeicherrohr 51 bilden. Damit diese Ausrichtung zueinander sichergestellt wird, umfassen die Wärmespeicherkörper 30, 31 an ihren zueinander gewandten Seiten Ausrichtungshilfen 35, 36. Die Ausrichtungshilfen 35, 36 umfassen eine bestimmte Form, durch die die beiden Wärmespeicherkörper 30, 31 nur in einer definierten Position zueinander passen. Die Ausrichtungshilfen 35, 36 sind an denjenigen Seiten der Wärmespeicherkörper 30, 31 vorgesehen, welche auch die Vertiefungen 32 umfassen. Die Ausrichtungshilfen 35 an einem Wärmespeicherkörper 31 können beispielsweise Erhebungen 35 sein. Die Ausrichtungshilfen 36 am benachbarten Wärmespeicherkörper können Aufnahmen 36 sein, welche zum Aufnehmen der Erhebungen 35 geformt sind. Die Erhebungen 35 sind vorzugsweise so hoch, dass sie vom Wärmespeicherkörper 31 weiter hervorstehen als Wärmetauscherrohre 51, die in den Vertiefungen dieses Wärmespeicherkörpers 31 hineingelegt sind. Beim Zusammenbau der Wärmespeichereinheit 1 wird nun ein anderer Wärmespeicherköper hierauf gelegt, wobei er im Allgemeinen zunächst noch nicht so passend ausgerichtet wäre, dass seine Vertiefungen auf die Wärmetauscherrohre 51 treffen. Vielmehr wird dieser Wärmespeicherkörper zunächst auf den Erhebungen 35 aufliegen (wobei seine Aufnahmen 36 noch nicht zu den Erhebungen 35 ausgerichtet sind). Weil die Erhebungen 35 höher herausragen als die Wärmetauscherrohre 51, wird sichergestellt, dass die Wärmetauscherrohre 51 nicht durch einen aufgelegten Wärmespeicherkörper beim Zusammenbau zerquetscht oder beschädigt werden. Bei dieser Ausführung ist vorteilhaft, wenn die Erhebungen 35 auf einer nach oben zeigenden Seite des Wärmespeicherkörpers 31 befinden, während sich die Aufnahmen 36 an einer nach unten zeigenden Seite des benachbarten Wärmespeicherkörpers befinden.

### Wärmetransferbegrenzung an der Einlassseite

Arbeitsfluid in einem Wärmespeicherrohr 51 wird sprunghaft stark erhitzt, wenn es in einem Bereich benachbart zu einem Wärmespeicherkörper 30, 31 kommt. Hierdurch kann das Arbeitsfluid rasch verdampfen, womit Materialbelastungen und eine ungleichmäßige Abkühlung des Wärmespeicherkörpers 30, 31 einhergehen. Um diese unerwünschten Effekte zu verringern, kann ein Wärmetransfer an der Einlassseite reduziert werden. Dies wird näher mit Bezug auf Fig. 5 erläutert.

Fig. 5 zeigt einen Ausschnitt einer Wärmespeichereinheit 1. Zwischen zwei Wärmespeicherkörpern 30, 31 verlaufen Wärmespeicherrohre 51. Die Wärmespeicherkörper 30, 31 können jeweils Vertiefungen haben, welche röhrenförmige Aufnahmekanäle für die Wärmespeicherrohre 51 bilden. Eine Einlassseite 52 kennzeichnet einen Bereich 62 ab der Kante, an welcher das Wärmespeicherrohr 51 zwischen den Wärmespeicherkörpern 30, 31 aufgenommen wird, das heißt, ab dem Beginn eines Aufnahmekanals. Ein Bereich 62 ab der Einlassseite 52 kann definiert sein als ein Bereich, der höchstens 10% oder höchstens 5% der Länge des Wärmespeicherkörpers 30 in Verlaufsrichtung der Wärmetauscherrohre 51 ausmacht.

In diesem Bereich 62 ist eine Wärmeleitfähigkeit von den Wärmespeicherkörpern 30, 31 zum Wärmetauscherrohr 51 kleiner als eine Wärmeleitfähigkeit in anderen Bereichen 63, 64 (also in Richtung der Auslassseite) von den Wärmespeicherkörpern 30, 31 zum Wärmetauscherrohr 51. Dies kann erreicht werden, indem die Aufnahmekanäle in ihrer Verlaufsrichtung einen variablen Durchmesser haben. Dieser kann an der Einlassseite den größten Wert haben. Hierdurch wird an der Einlassseite ein Abstand zwischen den Wärmetauscherrohren 51 und den Wärmespeicherkörpern 30, 31 gebildet. Über diesen Abstand ist die Wärmeleitfähigkeit reduziert.

Um verschiedene Wärmeleitfähigkeiten an verschiedenen Bereichen 62, 63, 64 der Wärmetauscherrohre vorzugeben, kann der Durchmesser eines Aufnahmekanals an diesen Bereichen 62, 63, 64 jeweils einen anderen Wert haben.

Prinzipiell können die Abstände mit Luft gefüllt sein. Gewünschte Wärmeleitfähigkeiten können aber präziser eingestellt werden, wenn um jedes Wärmetauscherrohr 51 ein oder mehrere Wärmeisolatoren angeordnet werden. Ein Wärmeisolator kann ein Isolationsring sein, beispielsweise ein Keramikring. Beim Beispiel von Fig. 5 können zumindest zwei Keramikringe pro Wärmetauscherrohr 51 vorgesehen sein, nämlich in den Bereichen 62 und 63. Der Keramikring im Bereich 62 ist in Radialrichtung größer als der Keramikring im Bereich 63, wodurch die Wärmeleitfähigkeit an der Einlassseite 52 geringer ist als an einem dahinter liegenden Bereich. Im Bereich 64 (in Verlaufsrichtung der Wärmetauscherrohrs 51 hinter dem Bereich 63) kann ein Kontakt zwischen den Wärmespeicherkörpern 30, 31 zum Wärmetauscherrohr 51 direkt, also ohne Wärmeisolator, erfolgen. Dadurch ist hier die Wärmeleitfähigkeit größer.

Vorteilhafterweise wird durch diese Maßnahmen das Arbeitsfluid im Bereich der Einlassseite 52 weniger stark erhitzt. Ein Verdampfen und Überhitzen des Arbeitsfluids verteilt sich über eine längere Strecke entlang der Wärmetauscherrohre 51. Dadurch sind Materialbelastungen geringer und der Wärmespeicherkörper wird gleichmäßiger abgekühlt.

### Beeinflussung des Drucks über die Wärmetauscher

Aus den Figuren 1 und 2 ist ersichtlich, dass bei einem mit Arbeitsfluid bis oberhalb des obersten Wärmetauschers 50 gefüllten Verteilerrohr 45 an den Wärmetauscherrohren 51 ein von oben nach unten ansteigender Fluiddruck aufgrund einer im Verteilerrohr 45 vorhandenen Fluidsäule anliegt. Liegt eine Fluidsäule im Verteilerrohr 45 derart vor, kann das Arbeitsfluid mit einem hohen Druck in einem unteren Bereich des Verteilerrohrs 45 in die unteren Wärmetauscherrohre 51 gedrückt und mit einem im Vergleich zu dem hohen Druck niedrigeren Druck in die oberen Wärmetauscherrohre 51 gedrückt werden. Hat das Verteilerrohr 45 einen konstanten Innendurchmesser kann an den Wärmetauschern 50 ein linear ansteigendes Druckgefälle von oben nach unten anliegen.

Wäre das Sammelrohr nicht wie erfindungsgemäß vorgesehen mit einer Flüssigkeit sondern mit Luft gefüllt, würde den verteilerseitigen Drücken sammelseitig außer dem Luftdruck kein weiterer Druck entgegenstehen. Dies hätte zur Folge, dass die Wärmetauscher 50 mit unterschiedlichen Flussgeschwindigkeiten des ein- und durchströmenden Arbeitsfluids durchströmt werden würden und in das Sammelrohr 55 einströmen würden.

Ist das Sammelrohr 55 jedoch mit einer Flüssigkeit bis oberhalb der obersten Einmündung eines Wärmetauschers 50 in das Sammelrohr 55 gefüllt, ist auch im Sammelrohr 55 eine Flüssigkeitssäule, insbesondere bei einer Füllung mit Wasser eine Wassersäule, ausgebildet. Diese sammelseitige Flüssigkeitssäule steht der verteilerseitigen Fluidsäule an den einzelnen Wärmetauschern 50 gegenüber, wodurch an allen Wärmetauschern 50 ein konstanter Druckabfall oder Differenzdruck anliegt. Dann können alle Wärmetauscher 50 mit der gleichen Flussgeschwindigkeit des Arbeitsfluids durchströmt werden. Eine derartige Kompensation des verteilerseitigen Druckgefälles kann besonders einfach dadurch erreicht werden, wenn, wie zum Beispiel aus den Figuren 1 und 2 ersichtlich, das Verteiler- und Sammelrohr 45 und 55 einen gleichen Innendurchmesser aufweisen und insbesondere zueinander parallel und/oder vertikal angeordnet sind. Arbeitsfluid, das in den Wärmetauschern verdampft wurde, steigt nun als Gas innerhalb der Flüssigkeit im Sammelrohr 55 nach oben und verlässt dieses durch einen Dampfauslass 58. Der Dampfauslass 58 befindet sich oberhalb einer Füllstandshöhe des Sammelrohrs 55 mit Flüssigkeit.

Fig. 4 zeigt eine perspektivische Darstellung des Wärmetauschers 50. Der Wärmetauscher 50 besteht im Wesentlichen aus einer Zuleitung 51a, mehreren Rohrabschnitten 51 und einer Ableitung 51b. Die Rohrabschnitte 51 verbinden jeweils die Zuleitung 51a mit der Ableitung 51b. Die Zuleitung 51a kann parallel zur Ableitung 51b verlaufen, wobei die Zuleitung 51a zur Ableitung 51b in der Höhe versetzt ist, so dass die Zuleitung 51a unterhalb der Ableitung 51b verläuft. Die Rohrabschnitte 51 können gleichmäßig versetzt und/oder parallel zueinander angeordnet sein. Jeder Rohrabschnitt 51 kann zwischen der Zuleitung 51a und der Ableitung 51b verlaufen und liegt unterhalb der Ableitung 51b und oberhalb der Zuleitung 51a. Die jeweiligen Enden der Rohrabschnitte 51 münden in die Zuleitung 51a und in die Ableitung 51b. Die Mündung in die Zuleitung 51a verläuft nach unten gekrümmt in einem halbkreisförmigen Bogen, der ein Abschnitt des ersten U-förmigen Teilabschnitts 71 ist. Die Mündung in die Ableitung 51b verläuft mit einem nach oben gekrümmten halbkreisförmigen Bogen, der ein Abschnitt des zweiten U-förmigen Teilabschnitts 72 ist. Die halbkreisförmigen Krümmungen oder U-förmigen Teilabschnitte 71, 72 ragen über die Zuleitung 51a und Ableitung 51b seitlich aus. Der durch die beiden U-förmigen Teilabschnitte 71, 72 ausgebildete stufenartige Verlauf des ersten Rohrabschnitts oder Zuleitung 51a, des zweiten Rohrabschnitts 51 und des dritten Rohrabschnitt oder Ableitung 51b ist auch aus Fig. 7 ersichtlich. Der erste und dritte Rohrabschnitt 51a und 51b weisen einen größeren Rohrdurchmesser als der Durchmesser des zweiten Rohrabschnitts 51 auf.

In den Figuren 1 und 2 ist gezeigt, dass sich am Sammelrohr 55 oberhalb des obersten Wärmetauschers 50 ein Nachfüllanschluss 74 zum Nachfüllen von Flüssigkeit in das Sammelrohr 55 befinden kann. Oberhalb des Nachfüllanschlusses kann ein Gas-/Flüssigkeitsseparator 76 zum Trennen von verdampftem Arbeitsfluid von der Flüssigkeit des Sammelrohrs 55 vorgesehen. Oberhalb des Separators 76 kann zudem ein Dampfauslass angeordnet sein, an dem gesammeltes verdampftes Arbeitsfluid einer weiteren Verwendung zugeführt werden kann.

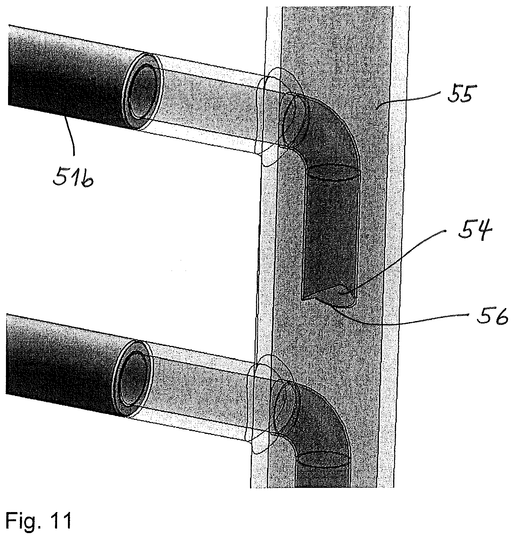

Fig. 11 zeigt in einer Perspektivansicht einen Einmündungsbereich eines Wärmetauschers 50 in das Sammelrohr 55 der Wärmespeichervorrichtung 100. Der Einmündungsbereich der Einmündung eines dritten Rohrabschnitts oder Ableitung 51b in das Sammelrohr 55 ragt in das Innere des Sammelrohrs 55 hinein. Die Ableitung 51b durchläuft hierzu den Mantel des Sammelrohrs 55. Sie kann dann insbesondere im rechten Winkel nach unten gekrümmt sein und dabei insbesondere vertikal nach unten verlaufen. Der vertikal nach unten verlaufende Abschnitt kann länger sein als der Durchmesser des Sammelrohrs 55. Am Ende des vertikal nach unten verlaufenden Abschnitts befindet sich die Einmündungsöffnung 54, die nach unten offen ist. Der Umriss 56 der Einmündungsöffnung 54 kann einen doppelt gezacktes Verlauf aufweisen, der von der Seite betrachtet V-förmig ist.

### Elektrischer Heizer

Fig. 8 zeigt in einer Perspektivansicht einen elektrischen Heizer 10 der Wärmespeichervorrichtung 100 von Fig. 1. Der elektrische Heizer 10 umfasst eine Metallplatte 11. Diese wird zwischen zwei Wärmespeicherkörpern angeordnet und hat im Wesentlichen die gleiche Grundfläche wie die Wärmespeicherkörper. Die Metallplatte 11 wird im Betrieb von einem elektrischen Strom durchflossen, wodurch Wärme entsteht. Die Metallplatte 11 umfasst Aussparungen 15, durch welche die Metallplatte 11 eine mäanderförmige Bahn oder serpentinenförmige Bahn 16 aufweist, entlang welcher bei Anlegen der elektrischen Spannung ein elektrischer Strom fließt. Die Aussparungen 15 können Schnitte vom Rand der Metallplatte 11 in Richtung des gegenüberliegenden Rands der Metallplatte sein. Solche Schnitte können in prinzipiell beliebiger Weise erzeugt sein, beispielsweise durch Laserschneiden oder Fräsen.

Die Metallplatte 11 umfasst elektrische Anschlüsse 21, 22, 23, an welchen elektrische Spannungen anlegbar sind. Die elektrischen Anschlüsse 21, 22, 23 können Bereiche der Metallplatte 11 sein, welche sich jeweils benachbart zu einem Anfang oder Ende einer mäanderförmigen Bahn 16 der Metallplatte 11 befinden.

Durch eine Metallplatte 11 mit mindestens einer mäanderförmigen Bahn 16 als elektrischer Heizer 10 werden mehrere wesentliche Vorteile verwirklicht: Ein solcher Heizer 10 ist verhältnismäßig raumsparend; gleichzeitig kann eine Wärmeabgabe zu benachbarten Wärmespeicherkörpern über eine große Fläche erfolgen, nämlich über die gesamte Fläche der Metallplatte 11. Zudem ist diese Gestaltung durch eine Metallplatte 11 sehr robust: Auf Wartungsarbeiten kann weitestgehend vollständig verzichtet werden; dies ist besonders wichtig, weil die Metallplatte 11 im zusammengebauten Zustand der Wärmespeichervorrichtung 100 nicht oder nur sehr schwer zugänglich ist. Auch ist dieser Aufbau verhältnismäßig kostengünstig, da der Hauptanteil der Kosten den Materialkosten der Metallplatte 11 entspricht; bei einem Abbau der Wärmespeichervorrichtung kann das Material der Metallplatte einfach wiederverwertet werden, womit die Gesamtkosten des elektrischen Heizers besonders niedrig sind.

Bei einer bevorzugten Ausgestaltung umfasst die mäanderförmige Bahn 16 zumindest zwei räumlich voneinander beabstandete Mäanderabschnitte 17, 18. Diese verfügen jeweils über elektrische Anschlüsse, so dass unterschiedliche Spannungen an den Mäanderabschnitten 17 und 18 angelegt werden können. Beispielsweise können die elektrischen Anschlüsse 21 und 22 am Anfang und Ende des Mäanderabschnitts 17 vorgesehen sein, während die elektrischen Anschlüsse 22 und 23 am Anfang und Ende des Mäanderabschnitts 18 vorgesehen sind. Der Anschluss 22 ist demnach ein gemeinsamer Anschluss, an dem dasselbe elektrische Potential für beide Mäanderabschnitte 17 und 18 erzeugt wird. An den anderen beiden elektrischen Anschlüssen 21 und 23 können hingegen voneinander verschiedene elektrische Potentiale erzeugt werden.

Durch getrennte Mäanderabschnitte 17 und 18 kann eine Heizleistung innerhalb des elektrischen Heizers 10 räumlich variiert werden. Dies ist wichtig, weil ein Wärmeabfluss von benachbarten Wärmespeicherkörpers in der Regel ebenfalls nicht gleichmäßig ist, sondern räumlich variiert. An einem Bereich eines Wärmespeicherkörpers, der benachbart zur Einlassseite der Wärmetauscherrohre für Arbeitsfluid ist, wird das ins Wärmetauscherrohr einströmende Arbeitsfluid schlagartig erhitzt und verdampft. Dadurch wird viel Wärmeenergie den benachbarten Bereichen der Wärmespeicherkörper entzogen. Hingegen wird einem Bereich des Wärmespeicherkörpers, der benachbart zur Auslassseite der Wärmetauscherrohre ist, weniger Wärmeenergie entzogen, weil hier das Arbeitsfluid nur noch wenig erhitzt wird. Um diesen ungleichmäßigen Wärmeabfluss zu kompensieren, ist es sinnvoll, dass der elektrische Heizer 10 in einem Bereich benachbart zur Einlassseite der Wärmetauscherrohre eine höhere Heizleistung hat als in einem Bereich benachbart zur Auslassseite der Wärmetauscherrohre. Dies kann durch entsprechende Spannungen an den beiden Mäanderabschnitten 17 und 18 erreicht werden.

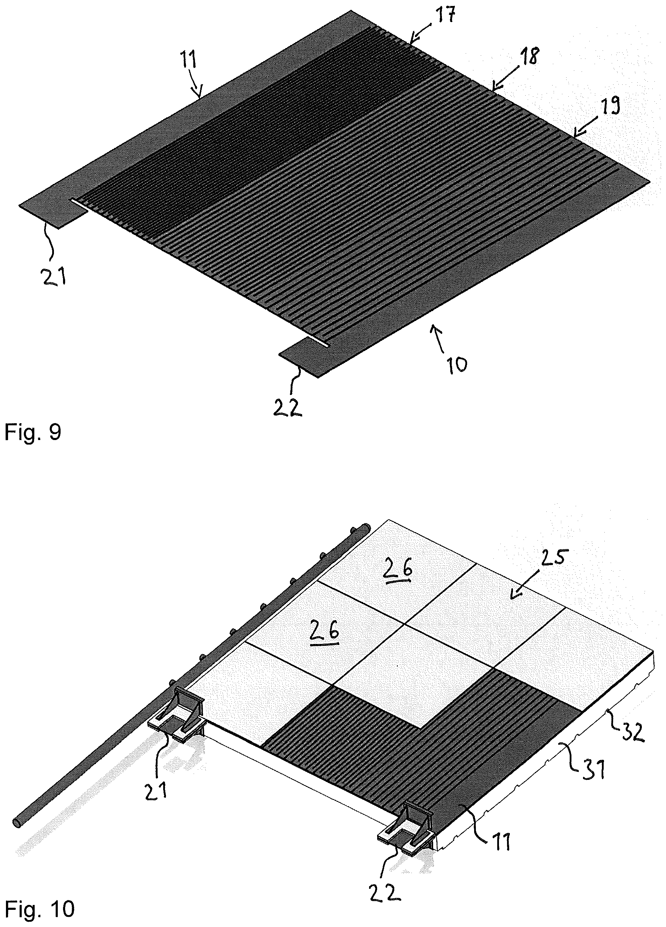

Zusätzlich oder alternativ zu unterschiedlichen Spannungen an verschiedenen Mäanderabschnitten 17 und 18 kann aber auch in anderer Weise eine ungleichmäßige Heizleistung über die Fläche der Metallplatte 11 bewirkt werden. Eine solche Ausführung ist in Fig. 9 gezeigt, welche wiederum eine Metallplatte 11 eines elektrischen Heizers 10 zeigt. In diesem Fall sind mehrere Mäanderabschnitte 17, 18, 19 vorgesehen, welche sich in ihrem elektrischen Widerstand unterscheiden. Hierzu kann die mäanderförmige Bahn in den Mäanderabschnitten 17, 18, 19 unterschiedliche Querschnittsflächen aufweisen. So sind beispielsweise im Mäanderabschnitt 17 die Aussparungen 15 enger nebeneinander gebildet als im Mäanderabschnitt 18. In diesem sind wiederum die Aussparungen 15 enger nebeneinander gebildet als im Mäanderabschnitt 19. Dadurch ist die zwischen den Aussparungen 15 gebildete metallische Bahn im Mäanderabschnitt 18 schmaler ist als im Mäanderabschnitt 19, und im Mäanderabschnitt 17 ist sie schmaler ist als im Mäanderabschnitt 18. Folglich ist der elektrische Widerstand im Mäanderabschnitt 17 höher als im Mäanderabschnitt 18, und in diesem höher als im Mäanderabschnitt 19, womit entsprechendes für die elektrische Heizleistung gilt.

Bei dieser Variante können die Mäanderabschnitte 17, 18, 19 direkt aufeinander folgen, ohne dass zwischen diesen ein elektrischer Anschluss vorhanden ist. Vielmehr genügen zwei elektrische Anschlüsse 21, 22, wobei ein elektrischer Anschluss 21 am Anfang des ersten Mäanderabschnitts 17 vorgesehen ist und der andere elektrische Anschluss 22 am Ende des letzten Mäanderabschnitts 19 vorgesehen ist. Somit werden hier unterschiedliche Heizleistungen durch unterschiedliche Widerstände bewirkt, ohne dass verschiedene Spannungen erforderlich wären.

Wenn ein elektrischer Strom durch die Metallplatte 11 fließt, muss sichergestellt werden, dass die Metallplatte 11 zu den benachbarten (metallischen) Wärmespeicherkörpern elektrisch isoliert ist. Eine entsprechende Gestaltung ist in Fig. 10 dargestellt. Diese zeigt perspektivisch einen Teil einer Wärmespeichereinheit 1. Auf der Metallplatte 11 sowie unter der Metallplatte 11 ist jeweils eine Isolationsschicht 25 vorgesehen. Auf die Isolationsschicht 25 folgt wiederum jeweils ein Wärmespeicherkörper. Die Isolationsschicht 25 umfasst im dargestellten Beispiel mehrere nebeneinander angeordnete, nicht starr miteinander verbundene Platten 26, beispielsweise Keramikplatten 26. Zwischen den Platten 26 sind vorzugsweise Lücken vorgesehen. Durch die nicht starre Verbindung und durch die Lücken zwischen diesen Platten 26 wird sichergestellt, dass unterschiedliche thermische Ausdehnungen der Metallplatte 11, der Platten 26 und der Wärmespeicherkörper keine Beschädigungen an der Isolationsschicht 25 hervorrufen. Im dargestellten Beispiel ist zu illustrativen Zwecken nur ein Teil der Metallplatte 11 mit Platten 26 belegt, während es bevorzugt sein kann, die gesamte Fläche der Metallplatte 1 mit Platten 26 zu belegen.

### Elektrische Ansteuerung

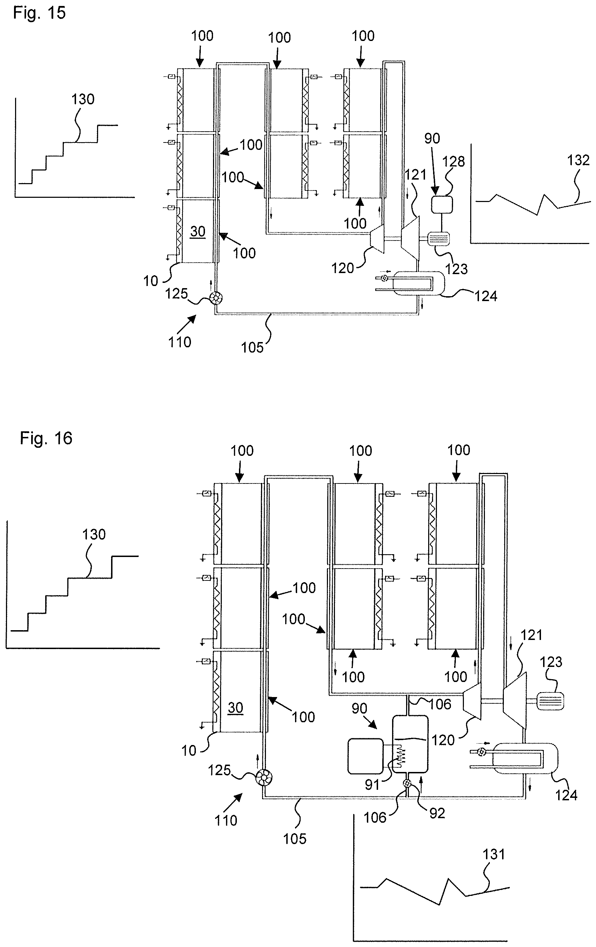

Eine Steuerung, um eine möglichst beliebig einstellbare elektrische Leistung aufnehmen und speichern zu können, wird zunächst mit Bezug auf Fig. 16 beschrieben.

Fig. 16 zeigt schematisch ein erfindungsgemäßes Kraftwerk 110, welches mehrere erfindungsgemäße Wärmespeichervorrichtungen 100 umfasst. Diese können wie oben beschrieben gebildet sein. Zudem umfasst das Kraftwerk 110 mindestens eine Turbine 120, 121 sowie einen Generator 123. Diese stellen zusammen eine Stromerzeugungsvorrichtung dar. Ein Arbeitsfluid-Kreislauf 105 befördert Arbeitsfluid durch die Wärmespeichervorrichtungen 100, wobei das Arbeitsfluid verdampft. Sodann treibt das verdampfte Arbeitsfluid die Turbine 120 an. Fakultativ kann das Arbeitsfluid anschließend durch weitere Wärmespeichervorrichtungen 100 wieder erhitzt werden und sodann eine weitere Turbine 121 antreiben. Die Turbinen 121, 122 treiben den Generator 123 an, welcher hierdurch elektrische Energie erzeugt. Die elektrische Energie kann an ein externes Stromnetz ausgegeben werden. Auf den Generator 123 kann ein Kondensator 124 folgen, durch welchen das Arbeitsfluid wieder flüssig wird und mit einer Pumpe 125 wieder zu den Wärmespeichervorrichtungen 100 befördert wird.

Bei einer bevorzugten Ausgestaltung werden die elektrischen Heizer von zumindest einigen der Wärmespeichervorrichtungen 100, vorzugsweise von sämtlichen Wärmespeichervorrichtungen 100, entweder ausgeschaltet oder eingeschaltet, wobei sie im eingeschalteten Zustand nur mit einer einzigen elektrischen Leistung oder einer begrenzten Anzahl an möglichen elektrischen Leistungen betrieben werden können. Ein möglicher Verlauf einer hieraus folgenden elektrischen Energieaufnahme 130 ist im linken Graphen von Fig. 16 gezeigt. Dieser Graph zeigt in vertikaler Richtung die momentane Energieaufnahme aller elektrischen Heizer der Wärmespeichervorrichtungen des Kraftwerks 110. Die horizontale Achse entspricht der Zeit. Wie dargestellt, kann die Energieaufnahme 130 nur in Stufen erfolgen. Jede Stufe entspricht einer Wärmespeichereinheit oder -vorrichtung (oder einem später näher beschriebenen Teil 17, 18 eines elektrischen Heizers). Indem die Anzahl eingeschalteter elektrischer Heizer variiert wird, kann in Stufen die gesamte aufgenommene elektrische Leistung variiert werden. Diese Stufen haben in der Regel jedoch verhältnismäßig hohe Werte, so dass eine feinere Anpassung wünschenswert wäre. Dies ist insbesondere der Fall, wenn in einem externen Stromnetz, aus welchem die elektrischen Heizer ihre Energie beziehen, zeitweise ein Überangebot vorliegt (beispielsweise kann der Strompreis an einer Strombörse vorrübergehend negativ werden). In einem solchen Fall kann es wünschenswert sein, eine genau bestimmte Leistung dem Stromnetz zu entnehmen.

Dies wird durch einen variabel einstellbaren elektrische-Leistungsaufnehmer oder Leistungsabgeber 90 erreicht. Bei dem Beispiel von Fig. 16 wird ein variabel einstellbarer elektrische-Leistungsaufnehmer 90 genutzt, welcher einen variabel einstellbaren elektrischen Heizer 91 umfasst. Der Heizer 91 ist so im oder am Arbeitsfluid-Kreislauf 105 angeordnet, dass Arbeitsfluid von diesem erhitzt und zur Turbine 120, 121 befördert werden kann. Dabei ist der Heizer 91 auf einem Bypass 106 relativ zu Wärmespeichervorrichtungen 100 angeordnet. Der Bypass 106 ist eine Umgehungsleitung, durch welche Arbeitsfluid an einer oder mehreren Wärmespeichervorrichtungen 100 vorbei geleitet wird. Dadurch wird Arbeitsfluid entweder auf dem Bypass 106 zum Heizer 91 geleitet, oder durch die Wärmespeichervorrichtungen 100. Dies hat den Vorteil, dass das Arbeitsfluid zum Heizer 91 flüssig gelangt und dort verdampft werden kann. Hingegen wird Arbeitsfluid von den Wärmespeichervorrichtungen 100 ebenfalls verdampft und würde daher den Heizer 91 in Gasform erreichen, wenn dieser stromabwärts zu einer Wärmespeichervorrichtung 100 angeordnet wäre. Die Menge an Arbeitsfluid, die über den Bypass 106 geleitet wird, ist einstellbar, beispielsweise über eine Pumpe 92 oder eine hier nicht dargestellte steuerbare Drossel im Bypass 106.

Der Heizer 91 kann mit einer variabel einstellbaren elektrischen Leistung versorgt werden. Zusammen mit den Heizern 10 der Wärmespeichervorrichtungen 100 kann somit eine beliebig (das heißt stufenfrei) einstellbare Leistungsaufnahme erreicht werden. Eine solche Leistungsaufnahme 131 ist in dem unteren Graph in Fig. 16 schematisch dargestellt.

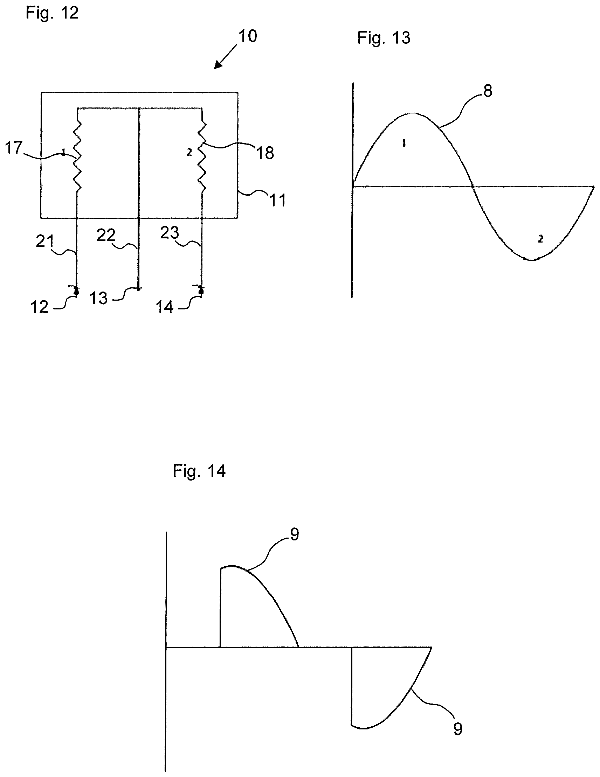

Der variabel einstellbare Heizer 91 ist verhältnismäßig kostengünstig, wobei bei dieser Ausführung die Heizer 10 einfach gestaltet sein können und keine aufwändigen Steuerungen benötigen. Zudem erzeugen hierdurch die Heizer 10 keine nachteiligen Oberschwingungen, welche bei einer phasengesteuerten Leistungsaufnahme auftreten würden. Dies ist detaillierter mit Bezug auf Fig. 14 beschrieben.

Die elektrische Ansteuerung eines elektrischen Heizers 10 wird nun mit Bezug auf die Figuren 12 und 13 beschrieben. Fig. 12 zeigt schematisch einen elektrischen Heizer 10, der wie der elektrische Heizer aus Fig. 8 gebildet sein kann. Schematisch dargestellt sind die Metallplatte 11, die beiden Mäanderabschnitte 17 und 18 sowie die elektrischen Anschlüsse 21, 22 und 23.

Die elektrische Ansteuerung umfasst Schalter 12 und 14, welche mit den elektrischen Anschlüssen 21 und 23 verbunden sind. Der elektrische Anschluss 22 ist hingegen auf Masse 13 gelegt und ist nicht schaltbar. Ein Schalter 12, 14 kann beispielsweise ein Thyristor sein. Durch die Schalter 12, 14 können die beiden Teile 17 und 18 des elektrischen Heizers 10 eingeschaltet und ausgeschaltet werden. Im Falle eines Thyristors als Schalter wird zudem eine Gleichrichtung bewirkt: Ein Stromfluss erfolgt nur, wenn die anliegende Spannung einen Schwellwert überschreitet.

Fig. 13 zeigt schematisch den zeitlichen Verlauf einer elektrischen Spannung 8, mit welcher ein elektrischer Heizer versorgt wird. Liegt diese Spannung 8 an einem Thyristor 12, 14 an, wirkt dieser gleichrichtend: Er schaltet sich aus (das heißt er wird nichtleitend), wenn die Spannung 8 unter einen Schwellwert fällt. Über ein Schaltsignal kann der Thyristor 12, 14 eingeschaltet werden.

Prinzipiell kann eine elektrische Leistungsaufnahme eines Heizers 10 variabel eingestellt werden, indem der Zeitpunkt des Einschaltens des Thyristors 12 und/oder 14 eingestellt wird. Dies ist beispielhaft in Fig. 14 gezeigt. Fig. 14 zeigt einen Spannungsverlauf 9 hinter dem Thyristor 12 beziehungsweise 14. Die Thyristoren 12, 14 werden zu einer bestimmten Phasenposition der Spannung 8 eingeschaltet und schalten sich wieder aus, wenn die Spannung einen bestimmten Wert unterschreitet. Dadurch ist die dem Heizer 10 zugeführte elektrische Leistung einstellbar. Bei einem Spannungsverlauf 9 entstehen aber Spannungsoberschwingungen, das heißt höherfrequente Spannungsanteile. Diese wirken nachteilig auf ein elektrisches Netz und sollten gering gehalten werden.

Deshalb werden gerade nicht sämtliche Heizer 10 in dieser Weise phasengesteuert. Es kann vorgesehen sein, dass ein einziger der elektrischen Heizer in dieser Weise phasengesteuert wird, während die übrigen Heizer 10 (oder Teile 17, 18 eines Heizers 10) nur auf einen einzigen festen Leistungsaufnahmewert eingeschaltet werden und ansonsten ausgeschaltet sind. Dadurch treten Oberschwingungen nur durch einen einzigen Heizer auf. Dieser Heizer stellt einen variabel einstellbaren elektrischen Heizer dar, wie auch oben beschrieben.

Die beiden Teile 17 und 18 eines Heizers 10 können zeitlich abwechselnd mit Energie versorgt werden. Sind die Schalter 12, 14 eingeschaltet, bewirken sie jeweils, dass sie für eine Halbwelle der Spannung 8 leitend sind. Im dargestellten Beispiel kann die mit 1 markierte Halbwelle der Spannung 8 (Fig. 13) einen Stromfluss an der mit 1 markierten Mäanderbahn 17 bewirken (Fig. 12), während die mit 2 markierte Halbwelle der Spannung 8 (Fig. 13) einen Stromfluss an der mit 2 markierten Mäanderbahn 18 (Fig. 12) bewirkt.

Durch die mit Bezug auf Fig. 14 beschriebene Phasensteuerung kann eine Wärmespeichereinheit (oder eine Wärmespeichervorrichtung) als variabel einstellbarer Leistungsaufnehmer genutzt werden, während die übrigen Wärmespeichereinheiten (oder die übrigen Wärmespeichervorrichtungen) nur eine bestimmte Leistungsaufnahme haben, wenn sie eingeschaltet sind.

Ein weiteres Ausführungsbeispiel eines erfindungsgemäßen Kraftwerks 110 ist schematisch in Fig. 15 dargestellt. Diese Ausführung entspricht im Wesentlichen der Ausführung aus Fig. 16, bis auf die Gestaltung des variabel einstellbaren Leistungsaufnehmers /-abgebers. So ist bei Fig. 15 kein Bypass mit variabel einstellbarem elektrischem Heizer vorhanden. Stattdessen wird ein variabel einstellbarer Leistungsabgeber genutzt, welche hier eine Steuerungseinheit für die Stromerzeugungsvorrichtung umfasst. Die Steuerungseinheit kann insbesondere eine Turbine 120, 121 und/oder einen Generator 123 der Stromerzeugungsvorrichtung steuern und kann demnach beispielsweise eine Turbinensteuerung 128 umfassen. Mit dieser kann eine Leistungsabgabe der Turbine 120 und/oder 121 verändert werden. Die Steuerungseinheit kann auch dazu eingerichtet sein, dem von der mindestens einen Wärmespeichervorrichtung 100 erhitzten Arbeitsfluid eine variable Menge an kühlerem Arbeitsfluid zuzugeben. Das kühlere Arbeitsfluid wurde nicht oder jedenfalls weniger stark von der mindestens einen Wärmespeichervorrichtung 100 erhitzt. Durch Zugabe des kühleren Arbeitsfluids wird die erzeugte elektrische Leistung der Stromerzeugungsvorrichtung verringert.

Zur Veranschaulichung der Leistungsausgabe ist diese im rechten Graph in Fig. 15 mit dem Bezugszeichen 132 dargestellt. Diese Leistungsausgabe ist frei, das heißt im Wesentlichen kontinuierlich einstellbar. Dies steht im Gegensatz zur summierten Leistungsaufnahme 130 aller eingeschalteten elektrischen Heizer 10 (linker Graph ins Fig. 15); diese Leistungsaufnahme 130 wird nur in Stufen und nicht kontinuierlich eingestellt.

Eine gewünschte Netto-Leistungsaufnahme des Kraftwerks 110 kann nun eingestellt werden, indem gerade so viele elektrische Heizer (welche insbesondere mit maximaler Leistungsaufnahme betrieben werden), genutzt werden, dass deren summierte Leistungsaufnahme geringstmöglich die gewünschte Netto-Leistungsaufnahme überschreitet. Zusätzlich verringert die vorgenannte Steuerungseinheit die Leistung, die von der Stromerzeugungsvorrichtung ausgegeben wird, soweit, dass die Leistungsabgabe der Stromerzeugungsvorrichtung addiert mit der Leistungsaufnahme aller betriebenen elektrischen Heizer gerade gleich der gewünschten Netto-Leistungsaufnahme ist.

Durch die erfindungsgemäße Wärmespeichervorrichtung kann in kostengünstiger und effizienter Weise eine große Energiemenge von elektrischer Form in Wärmeform umgewandelt und gespeichert werden.

## Patentansprüche

1. Wärmespeichervorrichtung zum Speichern von elektrischer Energie in Wärmeenergie, mit
mehreren aufeinandergestapelten Wärmespeichereinheiten (1),
einem Verteilerrohr (45) zum Zuleiten von flüssigem Arbeitsfluid zu den Wärmespeichereinheiten (1),
wobei jede Wärmespeichereinheit (1) umfasst:
- mindestens einen elektrischen Heizer (10) zum Umwandeln von elektrischer Energie in Wärmeenergie,
- mindestens einen Wärmespeicherkörper (30, 31) zum Aufnehmen und Speichern von Wärmeenergie des mindestens einen elektrischen Heizers (10) und
- einen Wärmetauscher (50) mit Wärmetauscherrohren (51) zum Aufnehmen von Wärmeenergie vom mindestens einen Wärmespeicherkörper (30, 31) und zum Verdampfen von in den Wärmetauscherrohren (51) leitbarem Arbeitsfluid, und einem Sammelrohr (55), welches mit den Wärmetauschern (50) verbunden ist, zum Ableiten des in den Wärmetauschern (50) verdampften Arbeitsfluids,
**dadurch gekennzeichnet,**
**dass** das Sammelrohr (55) mit einer Flüssigkeit gefüllt ist,
**dass** in einem oberen Bereich des Sammelrohrs (55) ein Dampfauslass (58) ist, durch welchen verdampftes Arbeitsfluid, welches durch die Flüssigkeit im Sammelrohr (55) aufsteigt, ableitbar ist.

2. Wärmespeichervorrichtung nach Anspruch 1,
**dadurch gekennzeichnet,**
**dass** das Sammelrohr (55) so gestaltet und so mit Flüssigkeit befüllt ist, dass die Druckdifferenzen vom Verteilerrohr (45) über die verschiedenen Wärmetauscher (50) zum Sammelrohr (55) gleich sind.

3. Wärmespeichervorrichtung nach einem der vorherigen Ansprüche,
**dadurch gekennzeichnet,**
**dass** ein Höhenunterschied, der zwischen einer untersten Verbindung einer der Wärmetauscher (50) mit dem Verteilerrohr (45) und einer obersten Verbindung einer der Wärmetauscher (50) mit dem Verteilerrohr (45) ausgebildet ist, gleich einem Höhenunterschied ist, der zwischen einer untersten Verbindung einer der Wärmetauscher (50) mit dem Sammelrohr (55) und einer obersten Verbindung einer der Wärmetauscher (50) mit dem Sammelrohr (55) ausgebildet ist.

4. Wärmespeichervorrichtung nach einem der vorherigen Ansprüche,
**dadurch gekennzeichnet,**
**dass** ein Füllstandssensor zum Überprüfen eines Füllstands der Flüssigkeit im Sammelrohr (55) vorgesehen ist.

5. Wärmespeichervorrichtung nach einem der vorherigen Ansprüche,
**dadurch gekennzeichnet,**
**dass** am Sammelrohr (55) ein Nachfüllanschluss (74) zum Nachfüllen von Flüssigkeit in das Sammelrohr (55) vorgesehen ist.

6. Wärmespeichervorrichtung nach Anspruch 4 und 5,
**dadurch gekennzeichnet,**
**dass** am Nachfüllanschluss (74) ein Steuerelement, insbesondere ein Ventil, vorhanden ist, wobei das Steuerelement in Abhängigkeit von einem Messwert des Füllstandsensors gesteuert wird.

7. Wärmespeichervorrichtung nach einem der vorherigen Ansprüche,
**dadurch gekennzeichnet,**
**dass** am oberen Ende des Sammelrohrs (55) ein Gas-/Flüssigkeitsseparator (76) zum Separieren des verdampften Arbeitsfluids von der Flüssigkeit im Sammelrohr (55) vorhanden ist.

8. Wärmespeichervorrichtung nach einem der vorherigen Ansprüche,
**dadurch gekennzeichnet,**
**dass** die Wärmetauscherrohre (51) sich ins Innere des Sammelrohrs (55) erstrecken und nach unten zeigende Einmündungsöffnungen (54) aufweisen.

9. Wärmespeichervorrichtung nach Anspruch 8,
**dadurch gekennzeichnet,**
**dass** der Umriss (56) der Einmündungsöffnungen (54) nicht in einer Ebene verläuft.

10. Wärmespeichervorrichtung nach einem der vorherigen Ansprüche,
**dadurch gekennzeichnet,**
**dass** die Wärmetauscherrohre (51) drei separat aufeinanderfolgende Rohrabschnitte (51, 51a, 51b) umfassen:
- einen erster Rohrabschnitt (51a) als Zuleitung für das flüssige Arbeitsfluid vom Verteilerrohr (45) zu den Wärmespeichereinheiten (1),
- einen zweiten Rohrabschnitt (51), der die aufeinandergestapelten Wärmespeichereinheiten (1) mindestens teilweise durchläuft und in dem das Arbeitsfluid verdampft, und
- einen dritten Rohrabschnitt (51b) als Ableitung des verdampften Arbeitsfluids zum Sammelrohr (55).

11. Wärmespeichervorrichtung nach Anspruch 10,
**dadurch gekennzeichnet,**
**dass** der zweite Rohrabschnitt (51) aus mehreren Einzelrohren (51) besteht, die jeweils mit dem ersten und dritten Rohrabschnitt (51a, 51b) verbunden sind.

12. Wärmespeichervorrichtung nach einem der Ansprüche 10 oder 11,
**dadurch gekennzeichnet,**
**dass** der zweite Rohrabschnitt (51) durch einen ersten U-förmigen Teilabschnitt (71) mit dem ersten Rohrabschnitt (51a) und durch einen zweiten U-förmigen Teilabschnitt (72) mit dem dritten Rohrabschnitt (51b) verbunden ist,
wobei der erste U-förmige Teilabschnitt (71) vom ersten Rohrabschnitt (51a) und der zweite U-förmige Teilabschnitt (72) zum dritten Rohrabschnitt (51b) jeweils von unten nach oben verläuft.

13. Verfahren zum Speichern von elektrischer Energie in Wärmeenergie, bei dem flüssiges Arbeitsfluid mit einem Verteilerrohr (45) zu mehreren aufeinandergestapelten Wärmespeichereinheiten (1) zugeleitet wird,
wobei jede Wärmespeichereinheit (1) umfasst:
- mindestens einen elektrischen Heizer (10), der elektrische Energie in Wärmeenergie umwandelt,
- mindestens einen Wärmespeicherkörper (30, 31), der Wärmeenergie des mindestens einen elektrischen Heizers (10) aufnimmt und speichert,
- wobei Wärmetauscherrohre (51) eines Wärmetauschers (50) Wärmeenergie vom mindestens einen Wärmespeicherkörper (30, 31) aufnehmen, wobei durch die Wärmetauscherrohre (51) geleitetes Arbeitsfluid verdampft wird, wobei ein Sammelrohr (55), welches mit den Wärmetauschern (50) verbunden ist, das in den Wärmetauschern (50) verdampfte Arbeitsfluid ableitet,
**dadurch gekennzeichnet,**
**dass** das Sammelrohr (55) mit einer Flüssigkeit befüllt wird,
**dass** verdampftes Arbeitsfluid, welches durch die Flüssigkeit im Sammelrohr (55) aufsteigt, durch einen Dampfauslass (58) in einem oberen Bereich des Sammelrohrs (55) abgeleitet wird.

14. Verfahren nach Anspruch 13,
**dadurch gekennzeichnet,**
**dass** die Flüssigkeit im Sammelrohr (55) in Sättigungstemperatur vorgehalten wird und
**dass** das vom Wärmetauscher (50) verdampfte Arbeitsfluid soweit über seine Sättigungstemperatur erhitzt wird, dass beim Durchströmen der Flüssigkeit im Sammelrohr (55) mehr Flüssigkeit verdampft als Arbeitsfluid kondensiert.

15. Kraftwerk zum Erzeugen von elektrischer Energie aus Wärmeenergie, die von einer Wärmespeichervorrichtung nach einem der Ansprüche 1 bis 12 abgegeben wird.

## Claims

1. Heat storage device for storing electrical energy as heat energy, comprising a plurality of heat storage units (1) stacked on top of each other;
a distribution pipe (45) for supplying liquid working fluid to the heat storage units (1);
wherein each heat storage unit (1) comprises:
- at least one electrical heater (10) for converting electrical energy into heat energy;
- at least one heat storage body (30, 31) for receiving and storing heat energy from the at least one electrical heater (10); and
- a heat exchanger (50) with heat exchanger pipes (51) for receiving heat energy from at least one heat storage body (30, 31) and for vaporizing working fluid that can run in the heat exchanger pipes (51);
and a collector pipe (55) which is connected with the heat exchangers (50) to output working fluid vaporized in the heat exchangers (50);
**characterized in that**
the collector pipe (55) is filled with a liquid;
in an upper area of the collector pipe (55), a vapor outlet (58) is provided to output vaporized working fluid which rises through the liquid in the collector pipe (55).

2. Heat storage device according to claim 1,
**characterized in that**
the collector pipe (55) is designed and filled with liquid such that the pressure differences from the distribution pipe (45) through the various heat exchangers (50) to the collector pipe (55) are equal.

3. Heat storage device according to any one of the preceding claims,
**characterized in that**
a height difference is formed between a lowest connection of one of the heat exchangers (50) with the distribution pipe (45) and an upmost connection of one of the heat exchangers (50) with the distribution pipe (45), said height difference being equal to a height difference formed between a lowest connection of one of the heat exchangers (50) with the collector pipe (55) and an upmost connection of one of the heat exchangers (50) with the collector pipe (55).

4. Heat storage device according to any one of the preceding claims,
**characterized in that**
a level sensor for checking a level of the liquid in the collector pipe (55) is provided.

5. Heat storage device according to any one of the preceding claims,
**characterized in that**
a refill port (74) for refilling liquid into the collector pipe (55) is provided at the collector pipe (55).

6. Heat storage device according to claim 4 and 5,
**characterized in that**
a control element, in particular a valve, is provided at the refill port (74), wherein the control element is controlled in dependence of a measurement value of the level sensor.

7. Heat storage device according to any one of the preceding claims,
**characterized in that**
a gas/liquid separator (76) for separating the vaporized working fluid from the liquid in the collector pipe (55) is provided at the upmost end of the collector pipe (55).

8. Heat storage device according to any one of the preceding claims,
**characterized in that**
the heat exchanger pipes (51) extend into the interior of the collector pipes (55) and comprise downward facing mouth openings (54).

9. Heat storage device according to claim 8,
**characterized in that**
the outline (56) of the mouth openings (54) does not extend in a plane.

10. Heat storage device according to any one of the preceding claims,
**characterized in that**
the heat exchanger pipes (51) comprise three separate consecutive pipe sections (51, 51a, 51b):
- a first pipe section (51a) for supplying the liquid working fluid from the distribution pipe (45) to the heat storage units (1),
- a second pipe section (51) which at least partially passes through the heat storage units (1) stacked on top of each other, wherein the working fluid vaporizes in the second pipe section (51), and
- a third pipe section (51b) as an exit for the vaporized working fluid to the collector pipe (55).

11. Heat storage device according to claim 10,
**characterized in that**
the second pipe section (51) is formed by several single pipes (51) which are each connected with the first and third pipe sections (51a, 51b).

12. Heat storage device according to one of claims 10 or 11,
**characterized in that**
the second pipe section (51) is connected through a first U-shaped segment (71) with the first pipe section (51a) and through a second U-shaped segment (72) with the third pipe section (51b),
wherein the first U-shaped segment (71) extends from the first pipe section (51a) upwards and the second U-shaped segment (72) extends upwards to the third pipe section (51b).

13. A method for storing electrical energy as heat energy, in which liquid working fluid is supplied with a distribution pipe (45) to a plurality of heat storage units (1) stacked on top of each other,
wherein each heat storage unit (1) comprises:
- at least one electrical heater (10) which converts electrical energy into heat energy,
- at least one heat storage body (30, 31) which receives and stores heat energy of the at least one electrical heater (10),
- wherein heat exchanger pipes (51) of a heat exchanger (50) receive heat energy from at least one heat storage body (30, 31), wherein working fluid running through the heat exchanger pipes (51) is vaporized,
wherein a collector pipe (55) connected with the heat exchangers (50) lets out the working fluid vaporized in the heat exchangers (50),
**characterized in that**
the collector pipe (55) is filled with a liquid,
vaporized working fluid which rises through the liquid in the collector pipe (55) exits through a vapor outlet (58) in an upper region of the collector pipes (55).

14. Method according to claim 13,
**characterized in that**
the liquid in the collector pipe (55) is provided at saturation temperature and
the working fluid vaporized by the heat exchanger (50) is heated above its saturation temperature such that, when it passes through the liquid in the collector pipe (55), more liquid vaporizes than working fluid condenses.

15. Power plant for generating electrical energy from heat energy which is output by a heat storage device according to any one of claims 1 to 12.

## Revendications

1. Dispositif de stockage de chaleur pour stocker de l'énergie électrique en tant qu'énergie thermique, comprenant :
plusieurs unités de stockage de chaleur (1) empilées les unes sur les autres, un tube de distribution (45) pour fournir du fluide de travail liquide aux unités de stockage de chaleur (1),
tandis que chaque unité de stockage de chaleur (1) comprend :
- au moins un dispositif de chauffage électrique (10) pour convertir de l'énergie électrique en énergie thermique,
- au moins un dispositif de stockage de chaleur (30, 31) pour recevoir et stocker de l'énergie thermique du au moins un dispositif de chauffage électrique (10), et
- un échangeur de chaleur (50) avec des tubes d'échangeur de chaleur (51) pour recevoir de l'énergie thermique d'au moins un dispositif de stockage de chaleur (30, 31) et pour la vaporisation de fluide de travail pouvant être acheminé dans les tubes d'échangeur de chaleur (51),
et un tube de collecte (55), lequel est connecté aux échangeurs de chaleur (50), pour évacuer le fluide de travail vaporisé dans les échangeurs de chaleur (50), **caractérisé en ce que**
le tube de collecte (55) est rempli d'un liquide,
dans une partie supérieure du tube de collecte (55), une sortie de vapeur (58) est prévue pour évacuer du fluide de travail vaporisé s'élevant via le liquide dans le tube de collecte (55).

2. Dispositif de stockage de chaleur selon la revendication 1
**caractérisé en ce que**
le tube de collecte (55) est conçu et rempli de liquide et de sorte que les différences de pression du tube de distribution (45) via les différents échangeurs de chaleur (50) vers le tube de collecte (55) sont identiques.

3. Dispositif de stockage de chaleur selon une des revendications précédentes
**caractérisé en ce que**
une différence de hauteur, laquelle est formée entre une connexion la plus basse d'un des échangeurs de chaleur (50) avec le tube de distribution (45) et une connexion la plus haute d'un des échangeurs de chaleur (50) avec le tube de distribution (45), est équivalente à une différence de hauteur, laquelle est formée entre une connexion la plus basse d'un des échangeurs de chaleur (50) avec le tube de distribution (55) et une connexion la plus haute d'un des échangeurs de chaleur (50) avec le tube de collecte (55).

4. Dispositif d'échangeur de chaleur selon une des revendications précédentes
**caractérisé en ce que**
un capteur de vérification du niveau de remplissage du liquide dans le tube de collecte (55) est prévu.

5. Dispositif d'échangeur de chaleur selon une des revendications précédentes
**caractérisé en ce que**
un orifice de recharge (74) pour rajouter du liquide dans le tube de collecte (55) est prévu au niveau du tube de collecte (55).

6. Dispositif de stockage de chaleur selon les revendications 4 et 5
**caractérisé en ce que**
un élément de commande, en particulier une valve, est prévue au niveau de l'orifice de recharge (74), tandis que l'élément de commande est contrôlé en fonction d'une valeur mesurée du capteur de niveau de remplissage.

7. Dispositif d'échangeur de chaleur selon une des revendications précédentes
**caractérisé en ce que**
un séparateur de liquide / gaz (76) pour séparer le fluide de travail vaporisé du liquide dans le tube de collecte (55) est prévu au niveau de l'extrémité supérieure du tube de collecte (55).

8. Dispositif d'échangeur de chaleur selon une des revendications précédentes
**caractérisé en ce que**
les tubes d'échangeur de chaleur (51) s'étendent vers l'intérieur des tubes de collecte (55) et présentent des ouvertures d'embouchure dirigées vers le bas (54).

9. Dispositif de stockage de chaleur selon la revendication 8
**caractérisé en ce que**
le contour (56) des ouvertures d'embouchure (54) ne s'étend pas dans un plan.

10. Dispositif de stockage de chaleur selon une des revendications précédentes
**caractérisé en ce que**
les tubes d'échangeur de chaleur (51) comprennent trois sections de tube séparés et se suivant les uns les autres (51, 51a, 51b) :
- une première section de tube (51a) en tant que conduite d'alimentation pour le fluide de travail liquide du tube de distribution (45) vers les unités de stockage de chaleur (1),
- une deuxième section de tube (51), qui traverse au moins en partie les unités de stockage de chaleur (1) empilées les unes sur les autres et dans laquelle le fluide de travail se vaporise, et
- une troisième section de tube (51b) en tant que sortie pour le fluide de travail vaporisé vers le tube de collecte (55).

11. Dispositif de stockage de chaleur selon la revendication 10
**caractérisé en ce que**
la deuxième section de tube (51) est composée de plusieurs tubes individuels (51), chacun connecté avec la première et la troisième section de tube (51a, 51b).

12. Dispositif de stockage de chaleur selon une des revendications 10 ou 11,
**caractérisé en ce que**
la deuxième section de tube (51) est connectée, par une première section en forme de U (71) avec la première section de tube (51a) et par une deuxième section en forme de U (72) avec la troisième section de tube (51b),
tandis que la première section en forme de U (71) s'étend de la première section de tube (51a) vers le haut et que la deuxième section en forme de U (72) s'étend vers le haut vers la troisième section de tube (51b).

13. Procédé pour stocker de l'énergie électrique en tant qu'énergie thermique, pour lequel
du fluide de travail liquide est fourni, par un tube distributeur (45), vers plusieurs unités de stockage de chaleur (1) empilées les unes sur les autres,
tandis que chaque unité de stockage de chaleur (1) comprend :
- au moins un dispositif de chauffage électrique (10) qui transforme de l'énergie électrique en énergie thermique,
- au moins un dispositif de stockage de chaleur (30, 31) qui reçoit et stocke de l'énergie thermique du au moins un dispositif de chauffage électrique (10),
- tandis que des tubes d'échangeur de chaleur (51) d'un échangeur de chaleur (50) reçoivent de l'énergie thermique d'au moins un corps de stockage de chaleur (30, 31), tandis que du fluide de travail s'écoulant dans les tubes d'échangeurs de chaleur (51) est vaporisé,
tandis qu'un tube de collecte (55), lequel est connecté aux échangeurs de chaleur (50), fait sortir le fluide de travail vaporisé dans les échangeurs de chaleur (50), **caractérisé en ce que**
le tube de collecte (55) est rempli d'un liquide,
du fluide de travail vaporisé, qui s'élève via le liquide dans les tubes de collecte (55), sort, par le biais d'une sortie de vapeur (58), dans une zone supérieure des tubes de collecte (55).

14. Procédé selon la revendication 13,
**caractérisé en ce que**
le liquide dans le tube de collecte (55) est fourni à une température de saturation et
le fluide de travail vaporisé par l'échangeur de chaleur (50) est chauffé au-dessus de sa température de saturation de sorte que, lorsqu'il passe dans le liquide dans le tube de collecte (55), il y a plus de liquide qui se vaporise que de fluide de travail qui se condense.

15. Centrale électrique pour produire de l'énergie électrique à partir d'énergie thermique émise par un dispositif de stockage de chaleur selon une des revendications 1 à 12.
